(19) Europäisches Patentamt
European Patent Office
Office européen des brevets

(11) **EP 1 851 511 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **06703886.9**

(22) Anmeldetag: **19.01.2006**

(51) Int Cl.:
***A63B 69/00*** *(2006.01)* ***G01C 21/16*** *(2006.01)*
***G01C 22/00*** *(2006.01)*

(86) Internationale Anmeldenummer:
**PCT/EP2006/000423**

(87) Internationale Veröffentlichungsnummer:
**WO 2006/077104 (27.07.2006 Gazette 2006/30)**

(54) **VERFAHREN UND VORRICHTUNG ZUR AUSWERTUNG VON BEWEGUNGSSIGNALEN**
METHOD AND DEVICE FOR EVALUATING DISPLACEMENT SIGNALS
PROCEDE ET DISPOSITIF D'EVALUATION DE SIGNAUX DE MOUVEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.01.2005 DE 102005004086**

(43) Veröffentlichungstag der Anmeldung:
**07.11.2007 Patentblatt 2007/45**

(73) Patentinhaber: **Xybermind GmbH**
**70272 Tübingen (DE)**

(72) Erfinder:
- **FEICHTINGER, Richard**
**72074 Tübingen (DE)**
- **LÖSCHINGER, Jürgen**
**72072 Tübingen (DE)**

(74) Vertreter: **Habbel, Ludwig**
**Habbel & Habbel**
**Patentanwälte**
**Postfach 34 29**
**48019 Münster (DE)**

(56) Entgegenhaltungen:
**WO-A-2004/072579 US-A- 5 181 181**
**US-A1- 2003 014 210 US-B1- 6 305 221**

- **HANSSON G-AA ET AL: "VALIDITY AND RELIABILITY OF TRAXIAL ACCELEROMETERS FOR INCLINOMETRY IN POSTURE ANALYSIS" MEDICAL AND BIOLOGICAL ENGINEERING AND COMPUTING, PETER PEREGRINUS LTD. / IFMBE, HERTS, GB, Bd. 39, Nr. 4, Juli 2001 (2001-07), Seiten 405-413, XP001178735 ISSN: 0140-0118**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 851 511 B1

## Beschreibung

Die Erfindung betrifft eine Verfahren gemäß dem Oberbegriff des Anspruchs 1 und eine Vorrichtung zum Durchführen des Verfahrens.

Die Druckschrift XP001178735 offenbart ein Verfahren zur Auswertung von Beschleunigungswerten im dreidimensionalen Raum. Bei dem bekannten Verfahren wird zu Beginn der Messungen eine erste Orientierung des Objektes vorgegeben und nach einer ersten Initialmessung aus den Signalen des 3D-Beschleunigungssensors eine erste Richtung im Raum bestimmt. Dann wird bei einer zweiten vorgegebenen Orientierung eine zweite Initialmessung durchgeführt, die eine zweite, von der ersten Richtung verschiedene Richtung im Raum ergibt. Aus den beiden Richtungen wird eine dritte Richtung ermittelt, die sich von den ersten beiden Richtungen im Raum unterscheidet. Diese drei Richtungen dienen zur Umrechnung gemessener Beschleunigungswerte.

Die nachfolgend beschriebenen Probleme bei herkömmlichen Verfahren und Vorrichtungen werden durch ein Verfahren, das die Merkmale des unabhängigen Anspruchs 1 aufweist, und eine Vorrichtung gelöst, welche die Merkmale des abhängigen Anspruchs 6 aufweist. Besondere Ausführungsarten sind in den abhängigen Unteransprüchen offenbart.

Die Erfindung betrifft ein Gerät zur Ermittlung von Bewegungen. Das Gerät erfasst mittels mehreren Bewegungssensoren die Bewegungen im Raum. Die Messwerte mindestens einer Bewegungsdimension werden mit den Messwerten mindestens einer anderen Bewegungsdimension verrechnet. Eine Drehgeschwindigkeitsmessung wird mit einer linearen Beschleunigungsmessung kombiniert. Drei lineare Beschleunigungsmessungen werden kombiniert, um Beschleunigungen in drei korrigierte Raumrichtungen umzurechnen. Eine solche Transformation ist nützlich, wenn das Anbringen der Sensoren nach den zu messenden Raumrichtungen schwierig ist, insbesondere bei Messungen am menschlichen Körper. Die Beschleunigungssensoren können nach diesem Verfahren beliebig angebracht werden, gewünschte Richtungen werden mittels zwei Initialpositionen festgelegt.

Der Abrollvorgang während eines Schrittes ist ein komplexer Vorgang. Die Füße sind hochkomplizierte Gebilde aus je 26 Knochen und 31 Gelenken und tragen nicht nur den menschlichen Körper, sie federn auch die Erschütterungen beim Gehen ab, sie halten uns im Gleichgewicht und erfühlen Unebenheiten des Untergrunds. Ein Merkmal einer menschlichen Abrollbewegung ist die Pronationsbewegung, eine Drehung im Sprunggelenk während des Abrollvorgangs. Eine Überpronation als zu hohe Pronation wird oft mit Beschwerden von Läufern in Zusammenhang gebracht. Viele Laufschuhe werden daher mit medialen Stützen angeboten, die eine Überpronation verhindern sollen. Umgekehrt ist die Verwendung einer Pronationsstütze unangebracht bei Vorhandensein einer Unterpronation (Supination) und wird wiederum als ein Auslöser von Beschwerden angesehen. Es existieren daher Hilfsmittel, um die Pronation bei Sportlern zu messen.

Verbreitet ist die Videoanalyse zur Laufschuhberatung. Der Kunde wird dabei mittels eines Videosystems beim Laufen auf einem Laufband aufgenommen. Das Video wird hinterher stark verlangsamt wiedergegeben. Dabei ist die mehr oder weniger normale Pronationsbewegung des Fußes beim Aufsetzten zu sehen. Da diese Bewegung leicht zu erkennen ist und übermäßige Pronation zu Beschwerden führen kann, wird in der Regel der Schuh empfohlen, mit dem der Kunde die geringste Pronation aufweist.

Die Vermessung am Laufband hat mehrere Nachteile: Erstens ist die erforderliche Ausrüstung teuer und braucht Platz. Zweitens ist das Laufen auf einem Laufband nicht einfach und verändert den normalen Laufstil. Bei ungeübten Kunden ist jedenfalls volle Betreuung erforderlich. Drittens ist die Methode aufgrund ihrer Ungenauigkeit wissenschaftlich stark umstritten. Viertens wird die normale und für die Gesundheit wichtige Pronationsbewegung oft überkompensiert. Trotzdem ist diese Methode in speziellen Laufschuhfachgeschäften-inzwischen weit verbreitet.

Daneben gibt es noch einige Systeme, die den Fuß barfuss über Druckmessplatten in der Bewegung erfassen. Das dynamische Messverfahren hat für einen Benutzer die zusätzliche Schwierigkeit, die relativ kleine Messplattform in einer normalen Schrittfolge überhaupt zu treffen. Druckmessplatten sind relativ teuer und die Auswertung der Druckdaten kann seriös nur durch Sportwissenschaftler vorgenommen werden.

Die Firma Currex bietet ein Softwareprogramm MotionQuest zur Unterstützung bei der Schuhauswahl an. Aufgrund der Eingabe verschiedener biomechanischer Daten sucht das Programm in einer Datenbank einen geeigneten Schuh aus. Die Station MotionQube von Currex erleichtert die Eingabe mittels eines Scanners. Dieselbe Technologie mit Scanner wird ebenfalls von Rothballer angeboten.

Scanner werden mit einer anderen Software, die alleine die Sohlenform berücksichtigt, als FootPrint von Schmitzl Systems vertrieben und sind in Runner's Point im Einsatz. Viele Fachgeschäfte veranstalten Aktionstage, in denen Messsysteme von bestimmten Schuhherstellern (zum Beispiel Footscansystem von Adidas, Scanner von Asics) zum Einsatz kommen.

Das hier beschriebene System erlaubt eine dynamische Messung beim Laufen. Gegenüber der weit verbreiteten Videoanalyse hat das System den Vorteil, viele Schritte mit hoher zeitlicher Auflösung automatisch zu vermessen und zu mitteln und als Ergebnis direkt eine Schuhempfehlung zu liefern. Vor allem aber kann es auch ohne Laufband eingesetzt werden.

Die Erfindung wird anhand eines Gerätes für die Bewegungsmessung von Läufern beschrieben, ist aber für verschiedenste Arten von Bewegungsmessungen geeignet. Es ist auch nicht auf den Einsatz am Menschen beschränkt. Beispielsweise kann mit 4 Sensoreinheiten an den Fesseln von Tieren, beispielsweise Pferden, das Gangbild dokumentiert und analysiert werden.

Mit der Technologie der "polysilicon surface micromachined sensors "sind kleine und leichte Bewegungssensoren günstig erhältlich. Damit ist eine Vielzahl von Anwendungen möglich, die eine Analyse von Bewegungen beinhalten. Beispielsweise nutzen Sportler Geräte, die Geschwindigkeit und Distanz mittels Beschleunigungsmessungen am Fuß errechnen. Patienten nutzen Geräte, welche die Aktivität und Körperlage mittels Beschleunigungssensoren ermitteln. Beispielsweise existieren Geräte die der Überwachung der Patienten dienen und etwa Pflegepersonal bei einem Fall oder Sturz warnen oder Geräte welche die Herzleistung aufgrund von Beschleunigungswerten schnell dem Bedarf anpassen, etwa Herzschrittmacher oder künstliche Herzen. Einige Herzfrequenzmessgeräte bauen auf dem Prinzip der Photoplethysmographie auf, bei der Bewegungsartefakte auftreten, und nutzen Bewegungssensoren, um besagte Bewegungsartefakte zu korrigieren.

Die Interpretation der Beschleunigungswerte erfolgt meist nach den Komponenten in drei orthogonalen Raumrichtungen. Die drei Richtungen werden bei Anwendungen am Menschen meist mit den anatomisch-physiologischen Richtungen Vorne/Hinten, Links/Rechts und Oben/Unten identifiziert, wobei letztere meist mit der Richtung der Schwerkraft des Gravitationsfeldes der Erde definiert wird.

Integrierte Schaltkreise (ICs) mit Beschleunigungssensoren sind entweder aufgrund ihrer Herstellung bereits so ausgeführt, dass sie Beschleunigungen in drei Raumrichtungen, die jeweils paarweise zueinander orthogonal stehen, messen können, oder, sofern sie herstellungsbedingt nur eine oder zwei Raumrichtungen messen können, leicht mechanisch so verbunden werden können, dass mit drei beziehungsweise zwei solcher ICs Beschleunigungen in allen drei orthogonal zueinander stehenden Raumrichtungen gemessen werden können. Eine Sensoreinheit, die Beschleunigungen in drei zueinander orthogonalen Raumrichtungen messen kann, wird im folgenden 3D-Beschleunigungssensor oder 3D-Sensor genannt, unabhängig davon, ob es sich um einen IC oder eine mechanisch zusammengesetzte Einheit aus mehreren ICs handelt.

Drehwinkelsensoren erfassen die Drehgeschwindigkeit um eine einzelne Drehachse, die üblicherweise normal zur Ebene des flachen Gehäuses des IC liegt.

In der Praxis ist es oft schwierig, 3D-Beschleunigungssensoren beispielsweise am Menschen derart anzubringen, dass die Richtungen der gemessenen Beschleunigungen den anatomisch-physiologischen Richtungen entsprechen.

Erstens bringt gerade der Vorteil der "polysilicon surface micromachined sensors", dass sie klein und leicht sind und damit das Messergebnis kaum beeinflussen sowie unscheinbar angebracht werden können, das Problem mit sich, dass wenige Millimeter große 3D-Beschleunigungssensoren schwerlich ohne technische Hilfsmittel genau in die gewünschten Raumrichtungen ausgerichtet werden können.

Zweitens ist für aussagekräftige Messung wichtig, dass die 3D-Beschleunigungssensoren an gut ausgewählten Stellen angebracht werden, zum Beispiel an Körperstellen, an denen knöcherne Strukturen nahe an die Hautoberfläche kommen, das heißt mit keinen oder nur geringen Muskel- oder Fettschichten bedeckt sind. Derartige Stellen sind aber zumeist selbst nicht in den gewünschten Richtungen ausgerichtet, zum Beispiel liegt die Schienbeinfläche schräg Vorne-Medial oder der Fußrist schräg nach Vorne-Unten. Des Weiteren haben manche gute Stellen runde Oberflächen, zum Beispiel die Knöchel, und geben daher selbst keine Richtung zur Anbringung von 3D-Beschleunigungssen-soren vor.

Drittens ist die individuelle Anbringung der 3D-Beschleunigungssensoren, insbesondere an gut ausgewählten Stellen am menschlichen Körper, sehr von der anbringenden Person, den individuellen anatomischen Gegebenheiten, den momentanen Umständen und dem Zufall abhängig. Beispielsweise ist bei Pulsmessungen am Ohr die Ausrichtung eines bewegungskorrigierten photoplethysmographischen Sensors von der individuellen Anbringung am Ohr abhängig und kaum vorhersagbar. Bei vielen Gelegenheiten, beispielsweise bei der operativen Einsetzung eines Herzschrittmachers oder künstlichen Herzens, ist es auch wünschenswert, auf die Ausrichtung im Raum keine Rücksicht nehmen zu müssen.

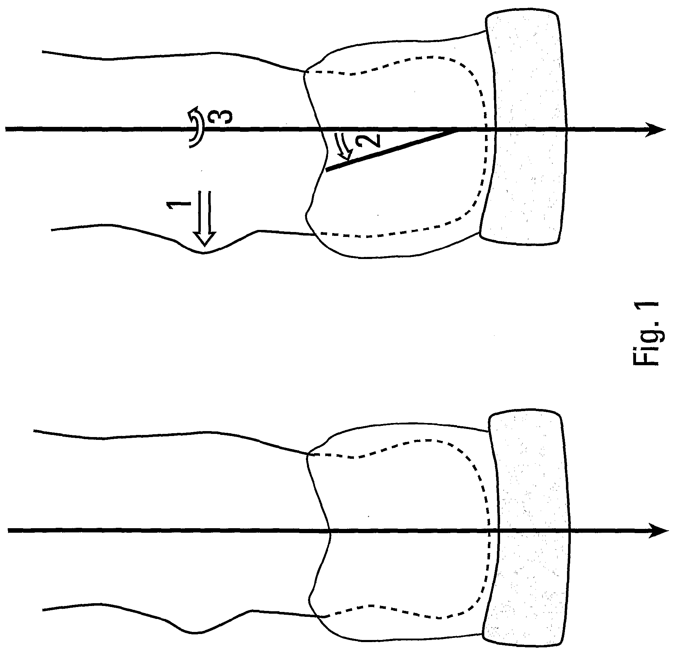

Die Schwierigkeiten bei der Anbringung von 3D-Beschleunigungssensoren werden deutlich bei der Methode von Lafortune und Hennig. Zur Lösung des Problems haben die Forscher die 3D-Beschleunigungssensoren mit einer handgroßen mechanischen Konstruktion verbunden. (Lafortune, M. A., & Hennig, E. M. 1991. Med. Sci. Sports & Exerc., 23(3), 360-363, Figure 1 und Lafortune, M. A. 1991, J. Biomechanics, 24(10), 877-886, Figure 1). Nach dem Anbringen am Bein der Versuchsperson wurde mit Photographien aus zwei eingemessenen orthogonalen Richtungen die tatsächliche Lage der 3D-Beschleunigungssensoren in Bezug zum Schienbein der Versuchsperson ermittelt. Die vom 3D-Beschleunigungssensor gemessenen Werte wurden dann anhand der aus den Photos ermittelten Lagebeziehung umgerechnet in Beschleunigungswerte in den drei gewünschten Raumrichtungen relativ zum Schienbein.

Mit dem hier beschriebenen Gerät können die Beschleunigungssensoren beliebig angebracht werden. Drei lineare Beschleunigungsmessungen werden kombiniert, um Beschleunigungen in drei korrigierte Raumrichtungen umzurechnen. Die Umrechnung erfolgt automatisch. Die gewünschten Richtungen werden mittels eines hier beschriebenen Verfahrens aus zwei Initialpositionen festgelegt. Eine solche Transformation ist nützlich, wenn das Anbringen der Sensoren nach den zu messenden Raumrichtungen schwierig ist, insbesondere bei Messungen am menschlichen Körper.

Das beschriebene Gerät misst die Bewegung des Probanden, beispielsweise des Kunden im Laufschuhfachgeschäft, um eine Aussage über das Ausmaß seiner Pronationsbewegung zu erhalten. Die Messwerte werden in einer Datenverarbeitungsanlage automatisch ausgewertet und ein für diesen Kunden empfehlenswerter Schuhtyp wird angezeigt.

Um eine Aussage über die Pronationsbewegung zu erhalten, haben sich drei Messstellen (1,2,3 in Figur 1) bewährt, die zusammen oder jede für sich allein verwendet werden können. Zusammen mit der Pronationsbewegung, die eine Drehung in der schräg verlaufenden Achse des Sprunggelenks darstellt, erfolgt eine Lateralbewegung des Knöchels (1 in Figur 1), eine Drehung des Fersenbeins und eine Drehung der Fersenkappe des Schuhs (2 in Figur 1), sowie eine Rotation des Schienbeins (3 in Figur 1).

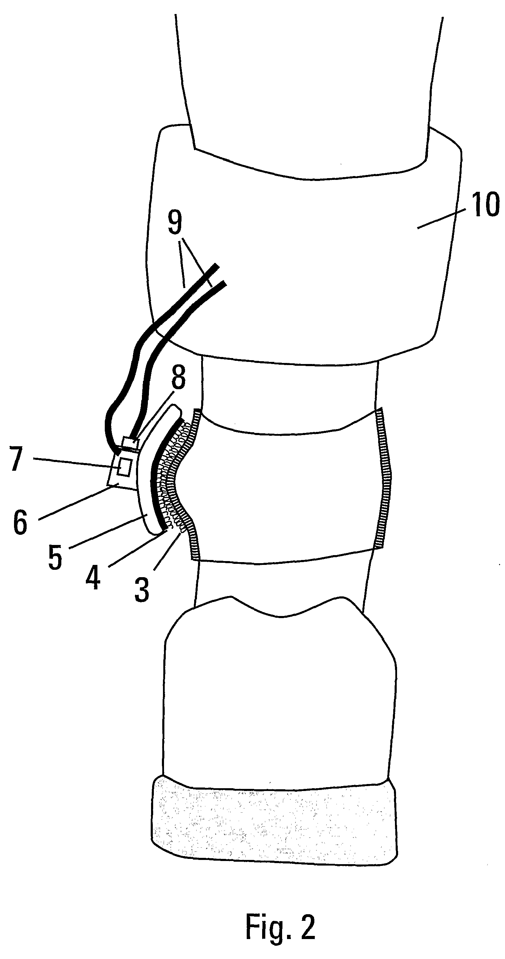

Die Figuren 2 und 5 bis 8 zeigen keine Ausführungsformen der Erfindung, sondern Beispiele, die das Verständnis der Erfindung erleichtern sollen.

Eine Anbringung eines 3D-Beschleunigungssensores an den Knöchel, um dessen Lateralbewegung während der Pronation zu messen, ist in Figur 2 gezeigt. Um das Bein wird ein elastisches Flauschband gelegt, mit der Flauschseite an der dem Bein abgewandten Seite (3). Ein Klettband (4) ist an der konkaven Innenseite einer Kunststoffschale (5) geklebt. An der konvexen Außenseite der Kunststoffschale ist ein 3D-Beschleunigungssensor angebracht, der in der in Figur 2 gezeigten Version aus zwei 2D-Beschleunigungssensoren (7,8) besteht, die an den Flächen eines Kunststoffwürfels (6) orthogonal zueinander angebracht sind. Die Sensoren (7,8) sind mit Kabel (9) mit einer Aufnahmeelektronik verbunden, die in einer Manschette (10) untergebracht ist.

Die fix verbundene Einheit aus Sensoren (7,8), Kunststoffwürfel (6) und Kunststoffschale (5) mit Klettband (4) wird einfach auf den vom Flauschband (3) bedeckten Knöchel gesetzt.

Das Verfahren der Erfindung ermöglicht es, 3D-Beschleunigungssensoren an ausgewählten Stellen in beliebiger Orientierung anzubringen. Die Vorteile der Kleinheit und Leichtheit von Mikrochipsensoren bleiben weitgehend erhalten und werden nicht durch Gehäuse kompromittiert, dessen Design die räumliche Ausrichtung der Sensoren berücksichtigen muss. Stattdessen wird eine rechnerische Koordinatentransformation vorgenommen, die von Mikroprozessoren auch sofort, das heißt mit jedem ursprünglichen Messwert bestehend aus drei Richtungskomponenten, vorgenommen werden kann.

Die Koordinatentransformation erfolgt anhand von Initialwerten, die aus den Werten von zwei Initialmessungen bestimmt werden. Diese zwei Initialmessungen erfolgen mit dem 3D-Beschleunigungs-sensor in situ, das heißt so wie er im Einzelfall angebracht ist. Die Werte der zwei Initialmessungen bleiben gültig, solange der 3D-Beschleunigungssensor in seiner ursprünglichen Position relativ zum vermessenen Objekt verbleibt. Die zwei Initialmessungen müssen neuerlich vorgenommen werden, wenn der 3D-Beschleunigungssensor seine Orientierung relativ zum vermessenen Objekt verändert, zum Beispiel indem er neu angebracht wird.

Es ist nicht ausreichend, nur eine Initialmessung vorzunehmen. Die Information einer einzelnen Initialmessung ist zwar hinreichend, um die Beschleunigungskomponente einer einzelnen gewünschten Raumrichtung auszurechnen, beispielsweise der Vertikalrichtung, wie in US 6,658,292. Die Information einer einzelnen Initialmessung ist aber nicht hinreichend, um die Komponenten einer oder beider der anderen gewünschten Richtungen auszurechnen. Jedenfalls nicht ohne einer Zusatzannahme, etwa dass eine der anderen gewünschten Richtungen in einer fixen Raumbeziehung zu einer der ursprünglichen Richtungen steht. Eine solche Zusatzannahme ist beispielsweise in der Methode enthalten, die in US 6,305,221 in Gleichungen 34 bis 49 beschrieben ist, um ein Referenzkoordinatensystem in ein zur Schwerkraft ausgerichtetes Koordinatensystem zu transformieren. In jener Methode wird zwischen Gleichung 35 und 36 explizit angenommen, dass zg, xg und x in einer Ebene liegen und somit die gewünschten Richtung xg in einer fixen Beziehung zur ursprünglichen Richtung x steht. Eine derartige Zusatzannahme ist aber bei mehr oder weniger zufälliger Anbringung eines 3D-Beschleunigungssensors gerade nicht möglich oder unerwünscht und für das Verfahren dieser Erfindung nicht nötig. Ohne solch eine Zusatzannahme einer fixen Beziehung einer gewünschten Raumrichtung zu einer ursprünglichen Raumrichtung ist es nur dann möglich, die Beschleunigungskomponente einer zweiten gewünschten Raumrichtung auszurechnen, wenn eine zweite Initialmessung vorgenommen wird.

Es ist auch hinreichend, zwei Initialmessungen vorzunehmen, um die Beschleunigungskomponenten für alle drei gewünschten Raumrichtungen auszurechnen, sofern die drei gewünschten Richtungen in einer fixen Beziehung zueinander (oder auch zu den Richtungen der zwei Initialmessungen) stehen, zum Beispiel wenn alle drei gewünschten Richtungen orthogonal zueinander stehen.

Die Koordinatentransformation von in drei Raumrichtungen gemessenen Beschleunigungswerten in drei andere, gewünschte Raumrichtungen entspricht der mathematischen Koordinatentransformation im Vektorraum. In Matrizenschreibweise ist

$$R = B^{-1} * A \qquad [1]$$

wobei R den Vektor der transformierten Beschleunigungswerte in den drei gewünschten Richtungen darstellt, A den Vektor der Beschleunigungswerte in den drei ursprünglichen Richtungen darstellt, * die Matrizenmultiplikation darstellt und B-1 die Inverse der Matrix B darstellt, wobei B aus den Basiswerten der gewünschten Richtungen (R1, R2 und R3 in Figur 3 und 4) im Koordinatensystem der ursprünglichen Richtungen (A1, A2 und A3 in Figur 5 und 6) gebildet wird. Die Koordinatentransformation ist somit vollständig beschrieben, wenn eine Methode angegeben wird, wie die Matrix B zu ermitteln ist. Sofern kartesische Koordinatensysteme verwendet werden, das heißt die drei Richtungen aus jeweils paarweise zueinander orthogonalen Einheitsvektoren gebildet werden, ist B-1 = BT, also die inverse Matrix gleich der transponierten Matrix.

Das Verfahren der Erfindung, wie aus zwei Initialmessungen die Werte der Matrix B für eine Koordinatentransformation ermittelt werden, wird im Folgenden an einem speziellen Beispiel beschrieben.

Das beispielhafte Gerät nutzt 2D-Beschleunigungssensoren von Analog Devices, ADXL210E, die sowohl digital als auch analog ausgelesen werden können. Beide Auslesemöglichkeiten führen im Rahmen der benutzten Anwendung, der Bestimmung von Beschleunigungskomponenten in Lateral-, Frontal- und Vertikalrichtung am Fußknöchel von Joggern, zu vergleichbaren Ergebnissen. Neben dynamischen Beschleunigungen werden von diesen Sensoren auch statische Beschleunigungen, insbesondere die Schwerkraft, gemessen. Ohne Verlust der Allgemeingültigkeit wird für dieses Beispiel angenommen, dass die Beschleunigungen, statische und dynamische, analog ausgelesen werden.

Das analoge Spannungssignal wurde digitalisiert (je Messwert 4-mal und gemittelt). Die Beschleunigungssensoren wurden nach Angaben des Herstellers einzeln und für jede Richtung kalibriert. Dabei wurde das Signal bei +1g und -1g gemessen und daraus Hub (die halbe Differenz) und Nullpunkt (der Mittelwert) bestimmt. Zwei kleine Platinen, ca. 1 cm2, mit je einem 2D-Beschleuni-gungssensor (7,8) wurden im Winkel von 90° zueinander auf einem Trägerwürfel (6) geklebt, sodass mit dem Auslesen von drei orthogonalen Richtungen ein 3D-Beschleunigungssensor vorliegt, der auf 1g normiert ist.

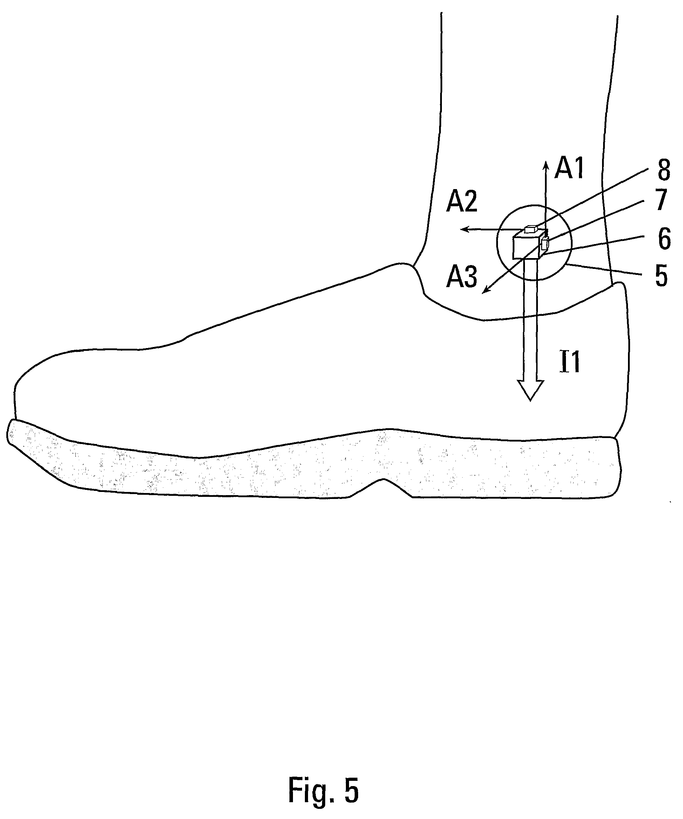

Der Trägerwürfel (6) ist an einer gerundeten Trägerscheibe (5) befestigt, an deren konkaven Innenseite ein Klettband (4) geklebt wurde (ca. 6 cm2). Ein elastischer Flausch (3) wurde um das Bein des Läufers gelegt, das mediale Knöchel bedeckend. Der 3D-Beschleunigungssensor wird einfach mit dem Klettverschluss auf den medialen Knöchel gesetzt, ohne Rücksicht auf die Ausrichtung des Trägerwürfels und damit der Richtungen der Sensoren, in Figur 5 mit den Richtungen A1, A2 und A3 gekennzeichnet. Die willkürliche Ausrichtung bleibt während der Bewegung stabil.

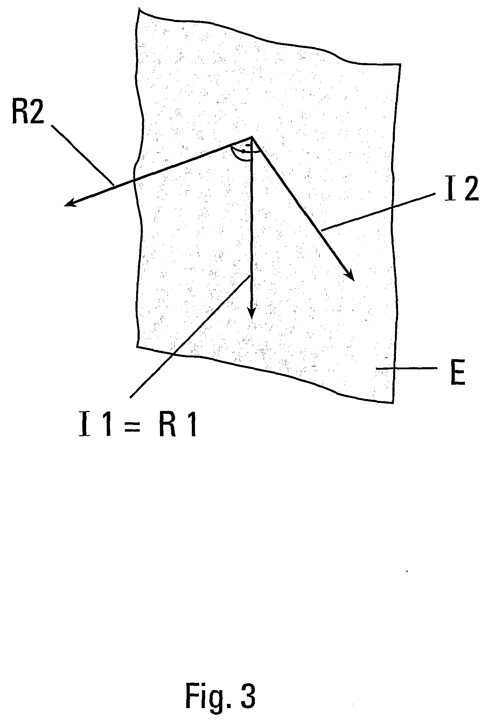

Nach dem Aufsetzen werden zwei Initialrichtungen gemessen. Da die gewählten Beschleunigungssensoren auch statische Beschleunigungen messen, wird mit dem beispielhaften Gerät die Richtung der wirkenden Schwerkraft in Ruhe in jeder von zwei Initialstellungen gemessen. Als erste Stellung wurde der aufrechte Stand gewählt, die Richtung der Erdbeschleunigung bei der ersten Initialmessung ist in Figur 5 mit I1 bezeichnet. Die gemessenen statischen Beschleunigungen (der Median aus 5 Messwerten) des 3D-Beschleunigungssensors in den drei Richtungen A1, A2 und A3 in der ersten Initialstellung werden beziehungsweise wird als dreidimensionaler Vektor Z gespeichert und zeigt in Richtung I1 = R1 (Figur 3) .

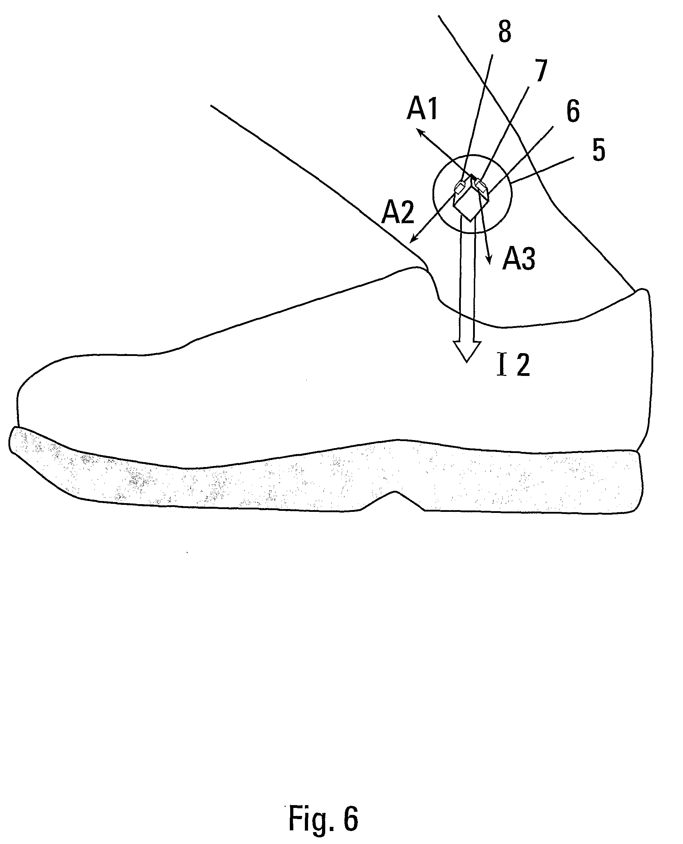

Eine zweite Initialrichtung muss von der ersten abweichen. Es ist ein wesentlicher Aspekt der Erfindung, dass die zweite Initialrichtung keinen rechten Winkel zur ersten Initialrichtung bilden muss, selbst wenn die gewünschten Richtungen orthogonal zueinander stehen sollen. Denn in der Praxis sind Initialstellungen, deren Initialrichtungen zueinander exakt im rechten Winkel stehen, dazu anatomisch-physiologisch gewünschte Richtungen vorgeben und auch noch stabil einzunehmen sind, sehr schwer erreichbar. In Figur 6 ist die zweite Initialrichtung als Richtung der Schwerkraft in der zweiten Initialstellung mit I2 bezeichnet.

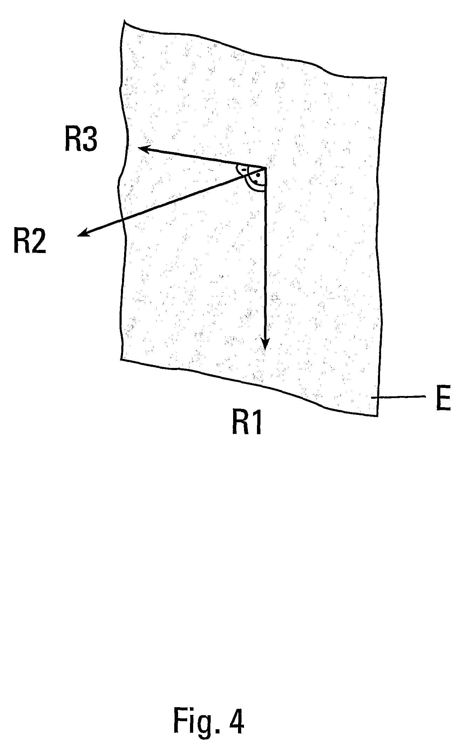

Die zwei Initialstellungen sind so gewählt, dass die Ebene (E in Figur 3), welche die erste Initialrichtung mit der zweiten Initialrichtung aufspannt, eine der für die Beschleunigungskomponenten gewünschte Richtung enthält (R3 in Figur 4). Bei Messungen am Fuß hat sich als zweite Initialstellung eine Kniebeuge bewährt, die mit der ersten Stellung erhaltene Eben ist dabei die Sagittalebene.

Die Orthogonalität der gewünschten Richtungen wird dagegen mit einem Rechenverfahren gesichert. Die gemessenen statischen Beschleunigungen (der Median aus 5 Messwerte) des 3D-Beschleunigungs-sensors in den drei Richtungen A1, A2 und A3 in der zweiten Initialstellung wird als Hilfsvektor H gespeichert und zeigt in Richtung I2 (Figur 3). Der Vektor X in die zweite gewünschte Richtung, R2 in Figur 3 (in Links/Rechts-Richtung), wird mit dem Kreuzprodukt erhalten:

$$X = Z \times H \quad [2]$$

Das Kreuzprodukt x von zwei dreidimensionalen Vektoren ergibt einen Vektor, der jeweils orthogonal zu den beiden Ausgangsvektoren ist. Die Länge hängt vom Winkel der Ausgangsvektoren zueinander ab. Weil dieser unbestimmt ist, muss die Länge normiert werden (zum Beispiel mit Hilfe des Skalarprodukts oder auf die Schwerkraft, siehe unten).

Der Vektor Y in die dritte gewünschte Richtung, R3 in Figur 4 (in Vor/Rück-Richtung), wird erneut mit einem Kreuzprodukt ermittelt, die Orthogonalität aller drei gewünschten Richtungen zueinander ist damit gesichert:

$$Y = X \times Z \quad [3]$$

Damit entspricht die zweite Initialrichtung (I2 in Figur 3 und 6) nicht selbst einer der gewünschten Richtungen, sondern geht nur in das Rechenverfahren ein, welche die beiden anderen gewünschten Richtungen (R2, siehe Figur 3 und indirekt R3, siehe Figur 4) ermittelt. Die Richtung R3, hier eine Vor/RückRichtung, liegt in der von den zwei Initialrichtungen I1 und I2 aufgespannten Ebene (E in Figur 3 und 4) und ist zur Vertikalrichtung (I1 - R1) orthogonal.

Die Länge der ermittelten Vektoren X, Y und Z in den gewünschten Richtungen R2, R3 und R1 wird normiert, im beispielhaften Gerät auf die Schwerkraft:

$$X' = X / lX \quad [4]$$

$$Y' = Y / lY \quad [5]$$

$$Z' = Z / lZ \quad [6]$$

wobei 1 die Länge des Vektors bedeutet und mit der Quadratwurzel der Summe der Quadrate der Komponenten errechnet wird.

Der Satz normierter Richtungsvektoren dient nun als Basis für das transformierte Koordinatensystem:

$$B = (X' \ Y' \ Z') \quad [7]$$

Aufgrund der durch die zweimalige Anwendung des Kreuzprodukts garantierte Orthogonalität aller Basisrichtungen zueinander und die Normierung auf die Einheitslänge 1g gilt für dieses Beispiel:

$$B^{-1} = B^{T} = (X' \ Y' \ Z')^{T} \quad [8]$$

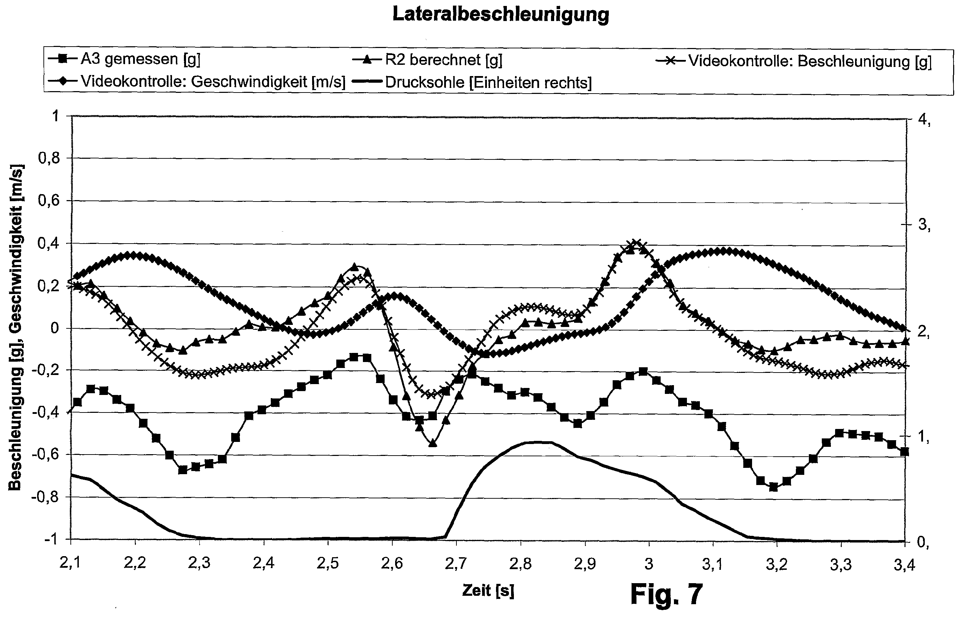

Die Wirkung der Koordinatentransformation ist in Figur 7 beispielhaft gezeigt. Dargestellt ist die durch zweimalige Differenzierung erhaltene Beschleunigung aus 3-D Raumkoordinaten, welche mit 5 Infrarotvideokameras aufgenommen wurden (Videokontrolle). Die Beschleunigungswerte waren während eines Schrittes, erkenntlich durch eine Druckmessung mit einer Druckmesssohle (Drucksohle), relativ gering zwischen -0,4g und +0,4g. Die Beschleunigungen in Vor-/Rückrichtung und in Vertikalrichtung betrugen dagegen bei der hier gewählten Aufnahmefrequenz von 50Hz und einem Mittelwertfilter über 3 Messwerte bis zu 4g und waren damit etwa 10mal größer (nicht gezeigt). Dadurch haben schon geringe Abweichungen in der Anbringung der Sensoren (7,8) starke Fehlsignale zur Folge. In Figur 7 ist das gemessene Signal am Knöchel in Richtung A3 gezeigt, sowie das nach der beschriebenen Methode errechnete Signal in Richtung R2. Das durch die Koordinatentransformation in Lateralrichtung errechnete Signal R2 ist dem Signal der Videokontrolle wesentlich ähnlicher, da die fälschlichen Einflüsse der Vertikalrichtung und der Vor-/Rückrichtung größtenteils herausgerechnet worden sind.

Die Verwendung von Beschleunigungssensoren, welche die statische Beschleunigung der Schwerkraft messen, ermöglicht das Feststellen der Initialrichtungen mit statischen Initialpositionen. Andernfalls müssen Initialbewegungen gemessen werden (und eventuell über eine Vielzahl von Messwerte gemittelt werden). Die Vertikalrichtung kann dabei zum Beispiel durch einen kurzen beidbeinigen Sprung am beziehungsweise im oder aus dem Stand ermittelt werden, eine die Vor/Rück-Richtung beinhaltende Ebene zum Beispiel durch Schwingen des Beins am beziehungsweise im Stand. Alternativ können zwei Bewegungen in der Horizontalebene zum Beispiel durch Schleifen des Fußes beziehungsweise Schuhs am Boden vermessen werden und die Vertikalrichtung durch ein Kreuzprodukt der beiden Horizontalrichtungen ermittelt werden. Die nach erfolgter Transformation erhaltenen Koordinatensysteme unterscheiden sich bei Messungen an Steigungen, weil im ersten Fall die Vertikale nach der Schwerkraft, im zweiten Fall als normal zur Horizontalebene definiert wird.

Statische Initialstellungen und dynamische Initialbewegungen können auch kombiniert werden. Beispielsweise kann aus der Richtung der Schwerkraft im Stand die erste Initialrichtung ermittelt werden, aus einem ebenen geraden Lauf die zweite Initialrichtung. Bei einem ebenen geraden Lauf sind Vertikal- und Seitwärtsbewegungen zyklisch und weisen im Mittel keine resultierende Ortsveränderung auf, während die Vorwärtsbewegung eine resultierende Ortsveränderung aufweist. Die Richtung des über mehrere Schritte zweifach integrierten Beschleunigungssignals (eventuell nach Subtraktion der Schwerkraft) wird beispielsweise als die zweite Initialrichtung definiert. Bei fehlender oder ungenügender Subtraktion der Schwerkraft wird die gemessene Richtung nicht allein der Vorwärtsbewegung entsprechen, sondern einen Anteil der Schwerkraft enthalten, das heißt einen Winkel zur Richtung Schwerkraft von weniger als 90 Grad einnehmen. Die von der Richtung der Schwerkraft (erste Initialrichtung) und der Bewegungsrichtung (zweite Initialrichtung) aufgespannte Ebene enthält jedenfalls die Vorwärtsrichtung, sodass nach dem beschriebenen Verfahren mit der zweimaligen Kreuzproduktbildung zuerst die Seitwärtsrichtung und danach die Vorwärtsrichtung immer orthogonal zueinander bestimmt werden können.

Aus den transformierten Beschleunigungswerten über die Zeit können durch Integration die Geschwindigkeiten in den jeweiligen Richtungen, durch doppelte Integrationen die zurückgelegten Wege in den jeweiligen Richtungen und durch Differenzierung Proportionale zu den Kraftanstiegsraten ermittelt werden.

Um die Geschwindigkeit zu einem bestimmten Zeitpunkt zu bestimmen, muss das integrierte Beschleunigungssignal zu bestimmten Zeitpunkten auf bestimmte Geschwindigkeiten gesetzt werden, zum Beispiel durch Nullsetzung zu bestimmten Zeitpunkten. Eine einfache Nullsetzung am Anfang einer Messung führt bei der Integration sehr schnell zum Aufsummieren von systematischen Fehlern (Drift). Dies ist besonders kritisch bei der doppelten Integration von Beschleunigungen zu den zurückgelegten Wegen, da selbst kleine Fehler bei der Setzung der Geschwindigkeit in der ersten Driftkorrektur nach der zweiten Integration zu großen Fehlern im Verlauf des Weges führen, da der Fehler in der Geschwindigkeit bei jedem Integrationsschritt der zweiten Integration mitsummiert wird.

Für die beschriebene Anwendung der Lateralbewegung des Knöchels (1) gilt mit hinreichender Genauigkeit, dass die Geschwindigkeit zum Zeitpunkt des Extremums der Beschleunigung nahe dem Schrittaufsatzpunkt Null ist (Figur 7). Das Extremum ist in dem in Figur 7 gezeigten Messungen ein Minimum, die Geschwindigkeit in Lateralrichtung während der Pronation zeigt in negative Richtung. Der Zeitpunkt der Nullsetzung der Geschwindigkeit wird aus dem korrigierten Signal R2 und nicht aus dem Messsignal A3 bestimmt.

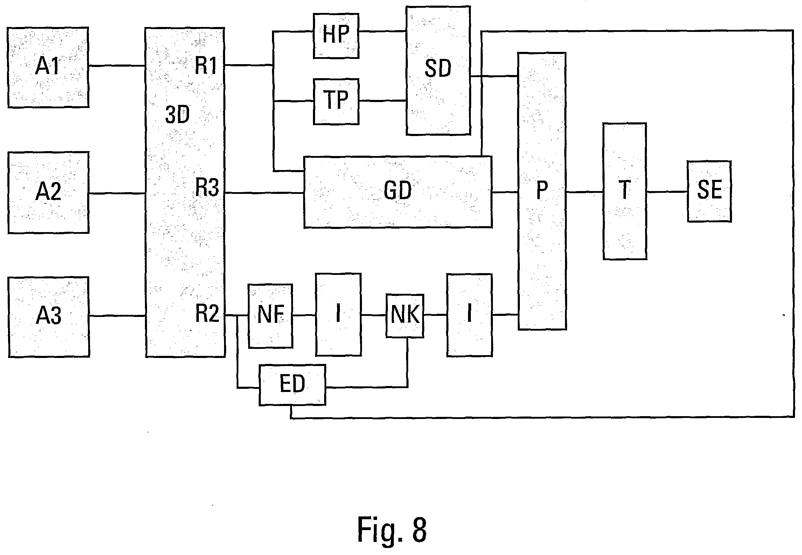

In Figur 8 ist das Verfahren schematisch dargestellt. Die Beschleunigungswerte der Sensoren (A1, A2 und A3) werden mit der Koordinatentransformation (3D) in die korrigierten Beschleunigungswerte (R1, R2 und R3) umgerechnet. Das Beschleunigungssignal in Vertikalrichtung (R1) wird einem Schrittdetektor (SD) zugeführt, der aus charakteristischen Mustern Fußaufsatz, Fersenabstoß und Fußabstoß errechnet, wie weiter unten beschrieben. In einer bevorzugten Ausführung passiert das Signal zuerst einen Hochpassfilter (HP) und einen Tiefpassfilter (TP). Die Beschleunigungssignale in Vertikal- und Vor-/Rückrichtung (R1 und R3) können bei Bedarf einem Geschwindigkeitsdetektor (GD) zugeführt werden, der die Laufgeschwindigkeit oder mit der Laufgeschwindigkeit korrelierende Parameter bestimmt, beispielsweise der Dauer des Schritts oder der Dauer der Standphase. Das Beschleunigungssignal in Lateralrichtung (R2) wird mit einem Nullfilter (NF) vor der ersten Integration (I) auf Null gefiltert, um ein Driften der Integration zu verhindern. In der Nullwertkorrektur (NK) wird die Geschwindigkeit Null gesetzt, wenn der Extremwertdetektor (ED) das zum Schritt passende Extremum ermittelt. Aus der Nullpunktkorrigierten Geschwindigkeit wird der laterale Weg (1 in Figur 1) des Knöchels ermittelt. Der Parameterdetektor (P) ermittelt aus dem zeitlichen Verlauf des lateralen Wegs des Knöchels und den Schrittzeiten aus dem Schrittdetektor (SD) für die Pronation relevante Parameter, wie beispielsweise die maximale Auslenkung während der Standphase (Maximum des lateralen Wegs) und die Rückkehr aus der Pronation in der Abstoßphase (Differenz aus dem besagten Maximum und dem Wert der Auslenkung beim Abstoß). In einer bevorzugten Ausführung werden die Parameter korrigiert nach der Laufgeschwindigkeit oder einem damit korreliertem Parameter, welche der Geschwindigkeitsdetektor (GD) ermittelt. Aus den Pronationsparametern, gemittelt über mehrere Schritte, wird der Lauftyp (T) ermittelt, beispielsweise Pronierer oder Supinierer. Je nach Lauftyp wird in der Schuhempfehlung (SE) ein Schuhtyp empfohlen, beispielsweise mit Pronationsstütze bei Pronierern und ohne Pronationsstütze bei Supinierern.

Bei kurzen Integrationszeiträumen über wenigen hundert Millisekunden, wie es während der Standphase eines Laufschritts der Fall ist, ist eine weitere Driftkorrektur typischerweise nicht notwendig, die Nullsetzung während jeden Schritts ist hinreichend genau. In anderen Fällen kann es nützlich sein, bei zyklischen Bewegungen die mittlere resultierende Bewegung mit der Drift gleichzusetzen und linear über die Zeit verteilt vom Signal zu subtrahieren, wie zum Beispiel in US 6,513,381 beschrieben.

Zur Glättung der Signale können Filterfunktionen eingesetzt werden, wie einem Fachmann bekannt.

Wenn Beschleunigungen und integrierte Funktionen auf ein äußeres Referenzkoordinatensystem bezogen werden sollen, können weitere Informationen, welche die Drehung des 3D-Beschleunigungssensores zum Referenzkoordinatensystem messen, hinzugezogen werden, etwa wie in US 6,305,221 beschrieben.

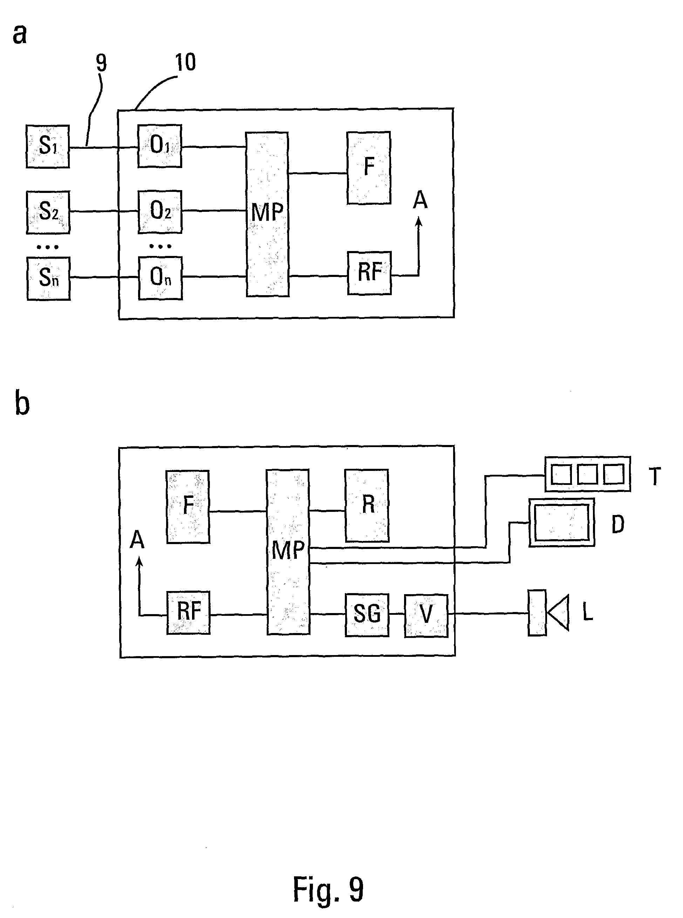

Figur 9 zeigt eine schematische Darstellung einer beispielhaft eingesetzten Hardware, die in zwei getrennte Einheiten, der Aufnahmeeinheit (a) und der Ausgabeeinheit (b), ausgeführt ist. In der Aufnahmeeinheit a sind die Sensoren (S1, S2, ... Sn) extern (über Signalleitungen 9) an die Messelektronik angeschlossen, welche in Manschette (10) untergebracht ist. Das Gerät führt die Signale je einem Operationsverstärker (O1 O2,...On) zu, bevor sie an einen Eingang des Mikroprozessors (MP) gelegt werden, der am Eingang eine Analog/Digital-Wandlung vornimmt. Verbunden mit dem Mikroprozessor ist ein Flashspeicher (F) zur Zwischenspeicherung der Daten. Da im beispielhaften Gerät die Verbindung der zwei Einheiten drahtlos ist, hat der Mikroprozessor noch eine Verbindung zu einem Funkmodul (RF) mit Antenne (A).

Die Auswerteeinheit in Figur 9b empfängt die Daten von der Aufnahmeeinheit über Antenne (A) und einem Funkmodul (RF) und führt sie einem Mikroprozessor (MP) zu. Dieser ist mit einem Flashspeicher (F) und einem RAM (R) verbunden. Zur Bedienung und Ausgabe sind Tastatur (T) und Display (D) angeschlossen, sowie ein Soundgenerator (SG), dessen Töne über einen Verstärker (V) an den Lautsprecher (L) geleitet werden. Über den Lautsprecher kann das Gerät selbständig den Messablauf führen, weil der Schrittdetektor beispielsweise Gehen und Laufen unterscheiden und die Anzahl der gültigen Schritte zählen kann.

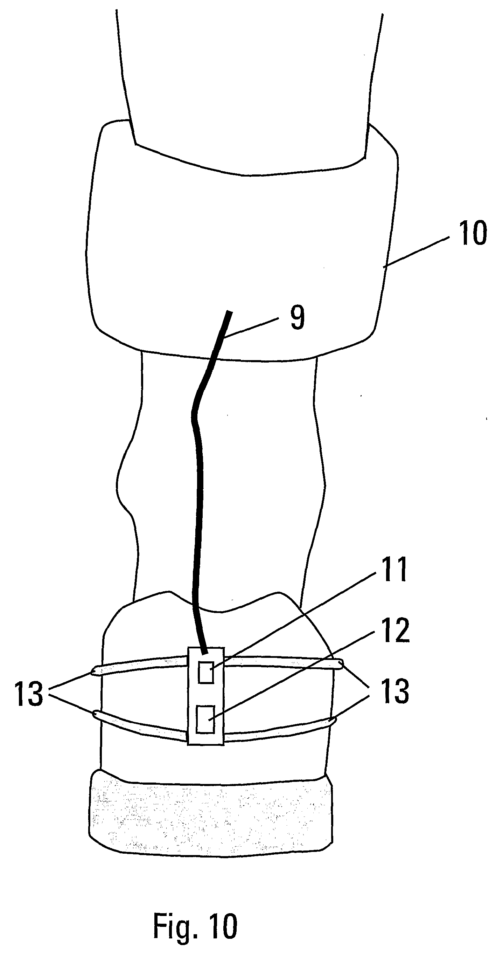

Das Gerät (Figur 9) wird in einer anderen Ausführung (Figur 10) benutzt, um die Drehung der Fersenkappe des Schuhs zu messen. Über Kabel (9) elektrisch mit der Aufnahmeelektronik, welche in der Manschette (10) untergebracht ist, sind ein Beschleunigungssensor (11) und ein Drehgeschwindigkeitssensor (12) verbunden. Die Sensoren sind fix auf einer Platine, welche mit Gummibändern (13) an die Fersenkappe des Schuhs befestigt wird. Der zeitliche Winkelverlauf der Fersenkappe des Schuhs wird durch Integration der vom Sensor (12) gemessenen Drehgeschwindigkeit erhalten.

Dabei wird der Beschleunigungssensor so angebracht, dass es mit hinreichender Genauigkeit das Vertikalsignal liefert. Ein 3D-Beschleunigungs-sensor mit einer Koordinatentransformation ist dabei im Allgemeinen nicht notwendig, da das Vertikalsignal selbst dann noch zu 90% registriert wird, wenn der Beschleunigungssensor mit 25° Abweichung von der Vertikalen angebracht wird. Im Folgenden wird ohne Einschränkung der Allgemeingültigkeit davon ausgegangen, dass eine Vertikalbeschleunigung durch einen Bremsstoß aus dem Aufprall am Boden durch Reduktion der Fallgeschwindigkeit eine positive Richtung hat. Ebenso wirkt dann die statische Erdbeschleunigung in positiver Richtung.

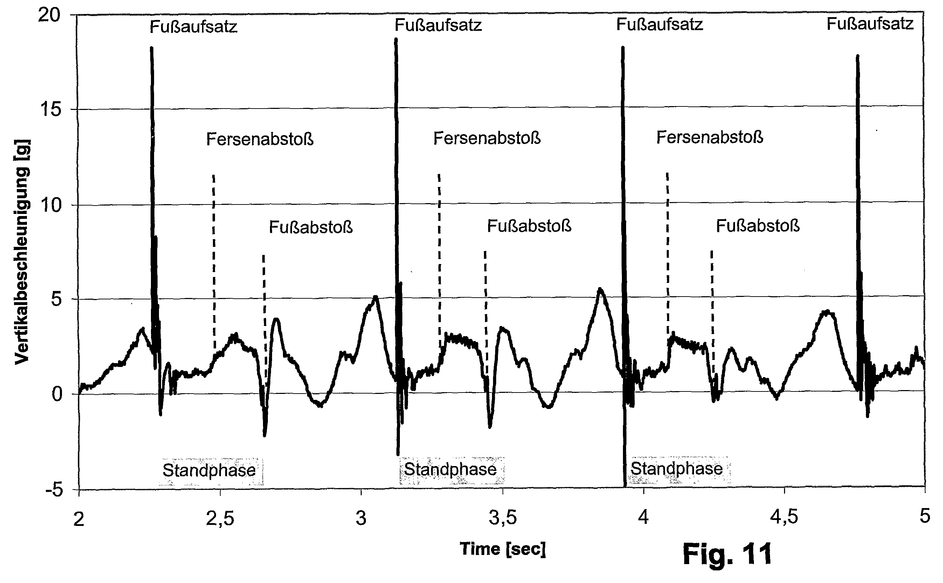

Das Beschleunigungssignal, das hinreichend genau in der Vertikalrichtung gewonnen wird, wird dabei analysiert, um bestimmte allgemeine Merkmale eines Schrittes zu erkennen (Figur 11). Aufgrund der erkannten Schrittmerkmale werden dann das Signal der Winkelgeschwindigkeit und/oder der durch Integration erhaltene Winkelverlauf ausgewertet. Die folgenden Werte wurden mit einer beispielhaft gewählten Hardware gewonnen, die mit 400Hz Messfrequenz aufzeichnet.

In einer bevorzugten Ausführung wird dabei der Fußaufsatz erkannt (Figur 11). Der Fußaufsatz wird zum Beispiel erkannt, indem das hinreichend vertikale Beschleunigungssignal einen Schwellwert (zum Beispiel 10g) überschreitet. In einer bevorzugteren Ausführung ist die Schwelle adaptiv, das heißt die Schwelle wird nach wenigen Schritten entsprechend den maximal auftretenden Signalen in einem bestimmten Korridor (zum Beispiel 4-12g) angepasst. Für die adaptive Schwellwertsetzung wird beispielsweise mit dem niedrigen Anfangswert 4g gestartet und von jedem überschwelligen Signal die Hälfte des über 4g hinausgehenden Maximums mit der bisherigen Schwelle, also zu Beginn 4g, gemittelt, um die neue Schwelle zu erhalten. Zeigt der erste peak beispielsweise ein Maximum von 18g, also 14g über dem Anfangsschwellwert, so wird die Hälfte über 4g, also 7g, zusammen 11g, mit der ersten Schwelle von 4g gemittelt und mit 7,5g die neue Schwelle festgelegt. Ist das folgende Maximum beispielsweise 19g, so erhöht sich die Schwelle auf 9,5g (Mittelwert aus 7,5g und 11,5g). Ist das dritte Maximum beispielsweise mit 10g nur knapp überschwellig, reduziert sich die adaptive Schwelle wieder (auf 8,25g, der Mittelwert aus 9,5g und 7g). Der Schwellwertdetektor kann bevorzugt Schwellwerte sowohl in positiver und negativer Richtung erkennen. In einer bevorzugten Ausführung wird das hinreichend vertikale Beschleunigungssignal erst hochpassgefiltert.

In einer bevorzugten Ausführung wird der Fersenabstoß erkannt (Figur 11). Der Fersenabstoß wird zum Beispiel erkannt, indem das hinreichend vertikale Beschleunigungssignal innerhalb einer definierten Zeitspanne nach dem Fußaufsatz ansteigt und einen Schwellwert, absolut (zum Beispiel 2g) oder relativ, überschreitet. In einer bevorzugteren Ausführung wird das hinreichend vertikale Beschleunigungssignal erst tiefpassgefiltert.

In einer bevorzugten Ausführung wird der Fußabstoß erkannt (Figur 11). Der Fußabstoß wird zum Beispiel erkannt, indem das hinreichend vertikale Beschleunigungssignal innerhalb einer definierten Zeitspanne (zum Beispiel in 0,15 - 0,9 sec.) nach dem Fußaufsatz und/oder einer anderen definierten Zeitspanne nach dem Fersenabstoß abfällt und einen Schwellwert, absolut oder relativ (zum Beispiel Abfall 2g), unterschreitet. In einer bevorzugteren Ausführung wird das hinreichend vertikale Beschleunigungssignal erst tiefpassgefiltert.

In einer bevorzugten Ausführung wird das Signal der Winkelgeschwindigkeit mit dem Signal aus den Beschleunigungssensoren verrechnet, insbesondere durch eine Kombination aus den genannten Merkmalen. Beispielsweise ist die Standphase als der Zeitraum zwischen Fußaufsatz und Fußabstoß definiert und der Zeitpunkt kann gesetzt werden, wenn ein bestimmter Prozentsatz der Standphase vergangen ist (beispielsweise das Integral zwischen 10% und 25% Standphase). Alternativ kann ein kleinerer Prozentsatz auf die gesamte Schrittlänge bezogen werden, der beziehungsweise die sich aus zwei aufeinander folgenden Fußaufsatzpunkten ergibt.

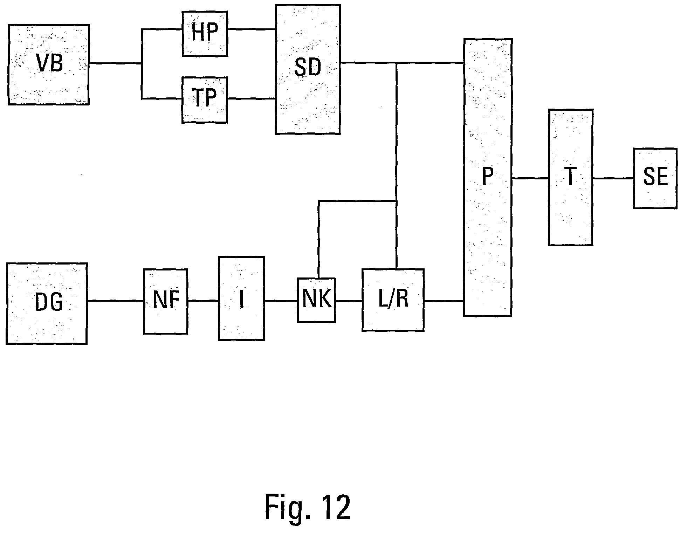

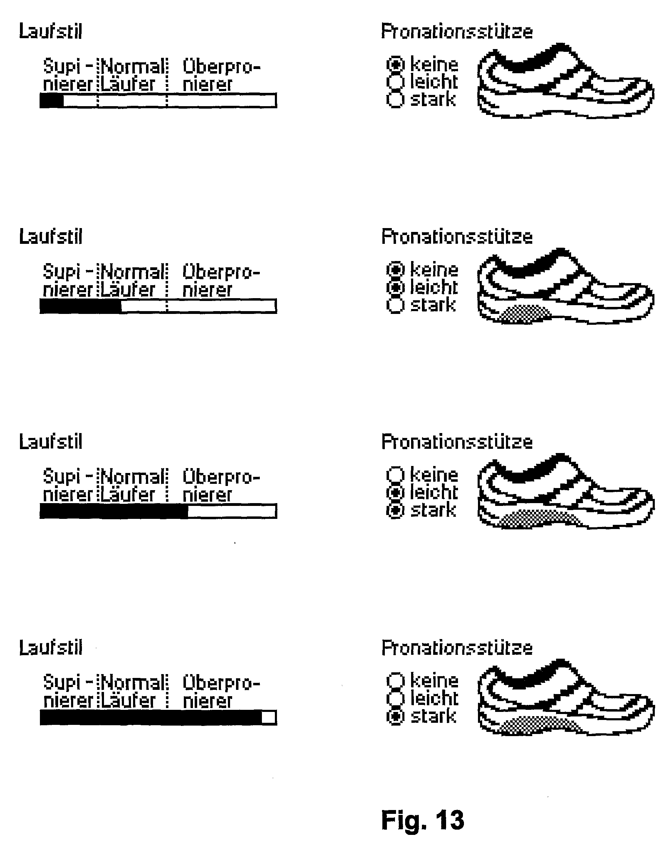

Figur 12 zeigt das Verfahren schematisch zusammengefasst. Die Vertikalbeschleunigung (VB) wird, bevorzugt über einen Hochpassfilter (HP) und einen Tiefpassfilter (TP), einem Schrittdetektor (SD) zugeführt, der aus charakteristischen Mustern Fußaufsatz, Fersenabstoß und Fußabstoß errechnet, wie oben beschrieben. Das Drehgeschwindigkeitssignal (DG) kann vor der Integration (I) einem Nullfilter (NF) zugeführt werden, um ein langfristiges Driften der Integration zu verhindern. Bei kurzen Integrationszeiträumen über wenigen hundert Millisekunden, wie es während der Standphase eines Laufschritts der Fall ist, ist eine derartige Driftkorrektur typischerweise aber nicht notwendig. In der Nullwertkorrektur (NK) kann der Winkel auf beziehungsweise an bestimmten Stellen auf Null gesetzt werden, wie weiter unten beschrieben. Das Signal wird links/rechts-korrigiert, da die Pronationswinkel auf den beiden Seiten entgegengesetzte Vorzeichen annehmen. Der Parameterdetektor (P) ermittelt aus dem zeitlichen Verlauf des Winkels und den Schrittzeiten aus dem Schrittdetektor (SD) für die Pronation relevante Parameter, wie beispielsweise das Integral der Winkelgeschwindigkeit von 20% Standphase bis 60% Standphase. In einer bevorzugten Ausführung sind die Integrationsgrenzen abhängig von Parametern, die aus dem Signal des Beschleunigungssensors (11) und/oder eines Beschleunigungssensors in der Manschette (10), wie weiter unten beschrieben, gewonnen werden. Ein Pronationsparameter wird bevorzugt aus mehreren Teilparametern errechnet, beispielsweise neben dem genannten Teilintegral die maximale Winkelgeschwindigkeit. Aus den Pronationsparametern, gemittelt über mehrere Schritte, wird der Lauftyp (T) ermittelt, beispielsweise Pronierer bei hohen Werten des Teilintegrals oder Supinierer bei niedrigen Werten des Teilintegrals. Je nach Lauftyp wird in der Schuhempfehlung (SE) ein Schuhtyp empfohlen, beispielsweise mit Pronationsstütze bei Pronierern und ohne Pronationsstütze bei Supinierern (Figur 13).

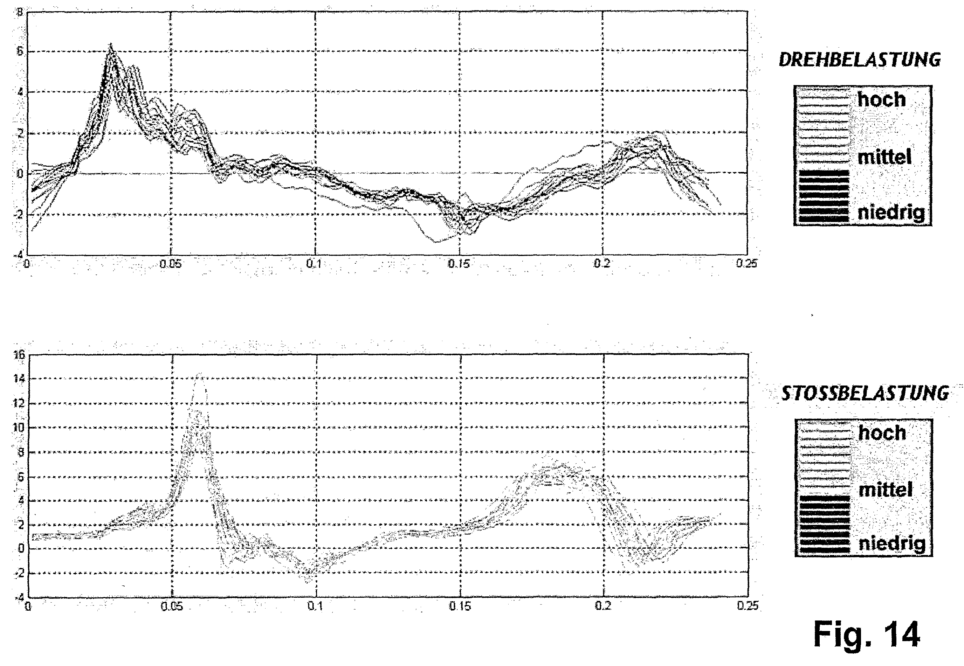

Das Gerät (Figur 9) wird in einer bevorzugten Ausführung mit weiteren Sensoren benutzt. In einer bevorzugten Ausführung ist zusätzlich zum Beschleunigungssensor (11) und Drehgeschwindigkeitssensor (12) an der Fersenkappe (Figur 10) ein weiterer Beschleunigungssensor in die Manschette (10) eingebaut. Dieser misst den Verlauf der Vertikalbeschleunigung am Bein. Figur 14 zeigt oben die Drehgeschwindigkeit, gemessen vom Drehgeschwindigkeitssensor (12), und daraus errechnet die Drehbelastung (zum Beispiel das Teilintegral von 10% bis 25% der Standphase, gemittelt über alle Schritte). Die Standphasen (und ca. 15ms davor) mehrerer Schritte sind überlagert, der Fußaufsatz und Fußabstoß wurde aus dem Beschleunigungssensor an der Fersenkappe (11) errechnet, wie oben beschrieben. Der untere Teil zeigt den Verlauf der Vertikalbeschleunigung am Bein. Die Standphasen (und ca. 15ms davor) mehrerer Schritte sind überlagert, der Fußaufsatz und Fußabstoß wurde aus dem Beschleunigungssensor an der Fersenkappe (11) errechnet, wie oben beschrieben. Aus dem Maximum und der Zeitdifferenz zwischen dem Maximum und dem Fußaufsatz (errechnet aus dem Beschleunigungssensor an der Fersenkappe (11), wie oben beschrieben) wurde die mittlere Anstiegsrate berechnet und als Merkmal der Stoßbelastung dargestellt.

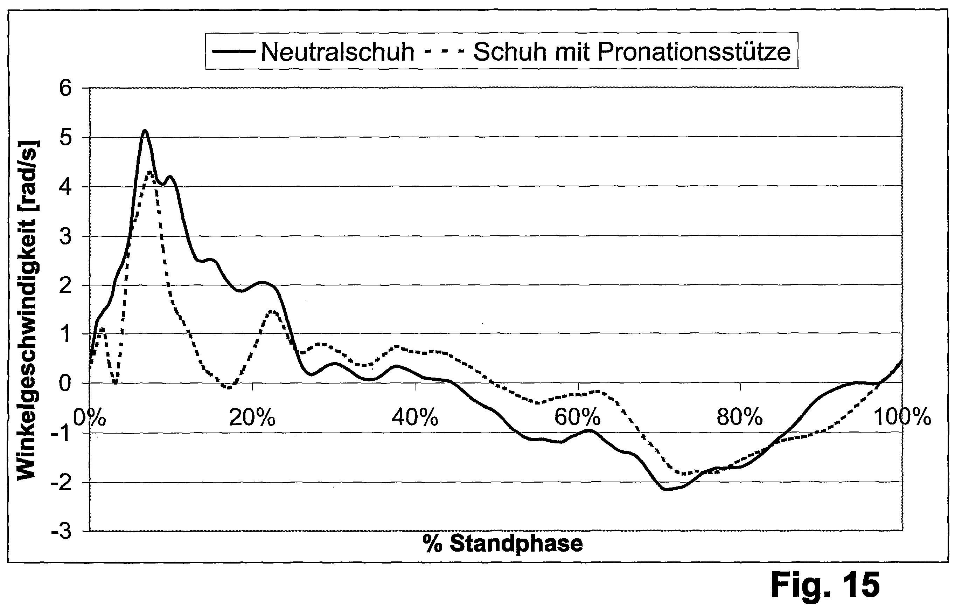

Das Gerät dient in einer bevorzugten Ausführung dazu, Schuhe zu vergleichen. Beispielsweise kann die Wirkung einer Pronationsstütze gemessen werden, indem der oben genannte Parameter Drehbelastung abnimmt. Figur 15 zeigt den Vergleich der Winkelgeschwindigkeit, gemittelt über mehrere Schritte, eines Neutralschuhs und eines Schuhs mit Pronationsstütze. Im Bereich von 10%-25% der Standphase ist die Winkelgeschwindigkeit deutlich geringer. Das Gerät kann auch gebrauchte Schuhe mit neuen Schuhen vergleichen, um beispielsweise die gebrauchten Schuh auf Abnutzungserscheinungen zu überprüfen. In einer bevorzugten Version werden die Daten des Läufers in seinem neuen Schuh gespeichert, um dann später mit den Werten im gebrauchten Schuh verglichen zu werden. In einer noch bevorzugteren Version werden die Daten auf einer Chipkarte gespeichert, die der Läufer als Schuhpass erhält und einen Schuhcheck an jeder derartigen Messstation ausführen kann, die mit einem Chipkartenleser ausgestattet ist. In einer bevorzugtesten Version werden die Daten vom Läufer mit dem neuen Schuh in einem Chip mit berührungslosem Schreib-/Leseverfahren (RFID) gespeichert, der an den Schuh fest angebracht werden kann oder in den Schuh fest eingebaut werden kann.

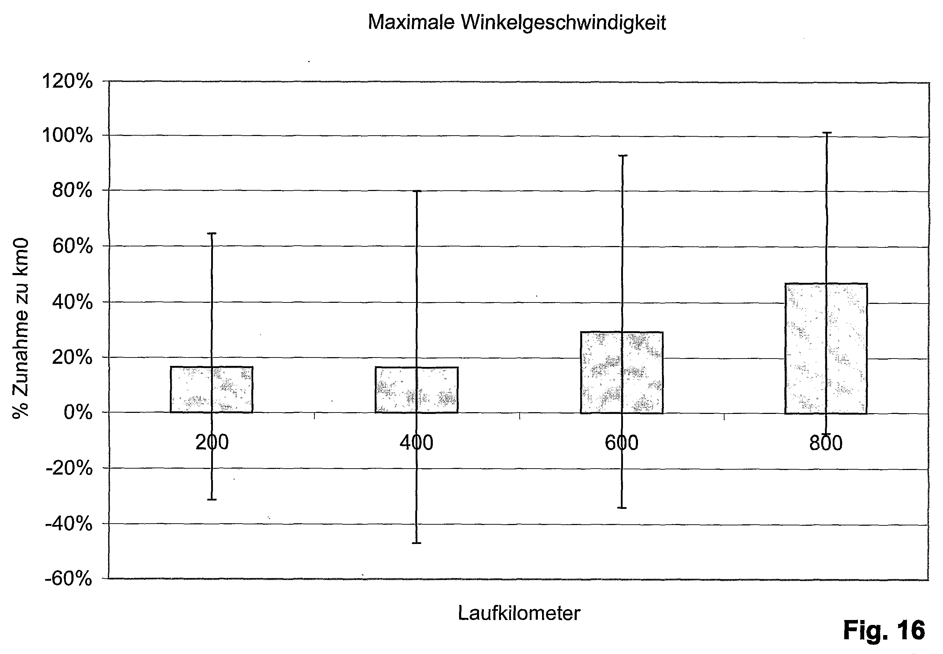

Figur 16 zeigt die Alterungserscheiungen von Laufschuhen gemittelt über zwanzig verschiedene Läufer. Gemessen wurde die maximale Winkelgeschwindigkeit gemittelt über mehrere Schritte und der Wert im neuen Schuh als Referenzwert gespeichert. Dabei wurden die Werte nach 200, 400, 600 und 800km Laufleistung mittels der jeweils durchschnittlichen zeitlichen Länge der Standphase, die von dem Geschwindigkeitsdetektor (GD) geliefert wurde, normalisiert zur durchschnittlichen zeitlichen Länge der Standphase des Referenzlaufs bei 0km, um unterschiedliche Laufgeschwindigkeiten auszugleichen. Beispielsweise wurde bei einer 10% längeren Standphase die maximale Winkelgeschwindigkeit um 10% erhöht vor Vergleich mit dem Referenzwert bei 0k. Der Anstieg über das initiale Plateau von etwa 18% Zunahme hinaus ab ca. 500km ist ein Merkmal der Schuhalterung.

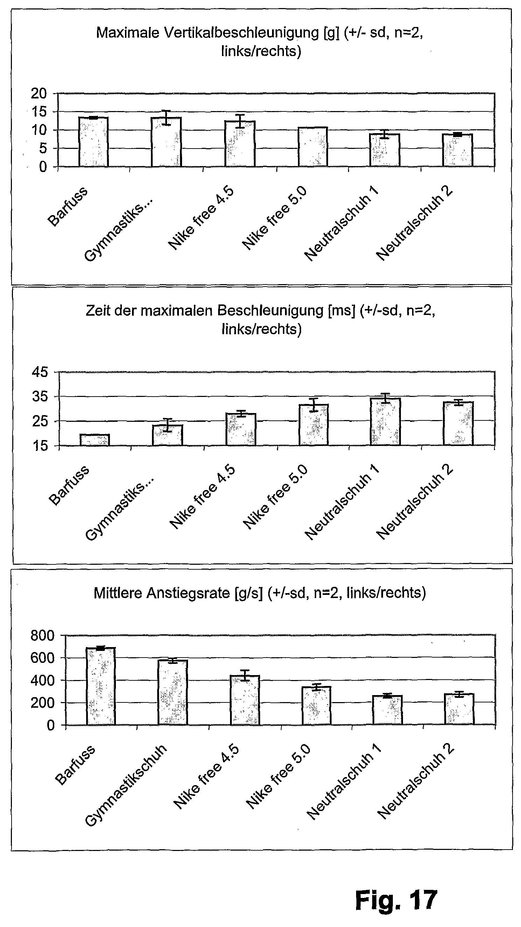

In einer weiteren Ausführung wird das Gerät benutzt, um die Wirkung von Schuheinlagen zu messen und zu bewerten. Figur 17 zeigt die Messung der Vertikalbeschleunigung am Bein, gemessen mit dem oben genannten Beschleunigungssensor in der Manschette (10). Verglichen wurden zwei Neutralschuhe verschiedener Hersteller mit dem Schuh Nike free, mit zwei verschiedenen Einlagen, "4.5" und "5.0", sowie ein Gymnastikschuh mit ungedämpfter Gummisohle und ein Barfußlauf ohne Socken, alles auf hartem Untergrund. Die obere Graphik zeigt die maximale Vertikalbeschleunigung in g am Bein. Die mittlere Graphik die Zeitdifferenz zwischen erstem Aufsatz, detektiert mit oben genannten Schwellwertdetektoren aus dem Signal des Beschleunigungssensors (11) an der Fersenkappe beziehungsweise an der Ferse beim Barfußlauf, und dem Zeitpunkt der maximalen Vertikalbeschleunigung am Bein. Die untere Graphik zeigt den Quotient aus maximaler Vertikalbeschleunigung und Zeitdifferenz und gibt die mittlere Anstiegsrate in g/s. Aus der Kombination der Signale der beiden Beschleunigungssensoren lassen sich mit der. Zeitdifferenz und der mittleren Anstiegsrate Parameter bestimmen, die eine wesentlich bessere Unterscheidung der verschiedenen Situationen, Neutralschuh, Schuh Nike free mit verschiedenen Einlagen, Gymnastikschuh und Barfußlauf ermöglichen.

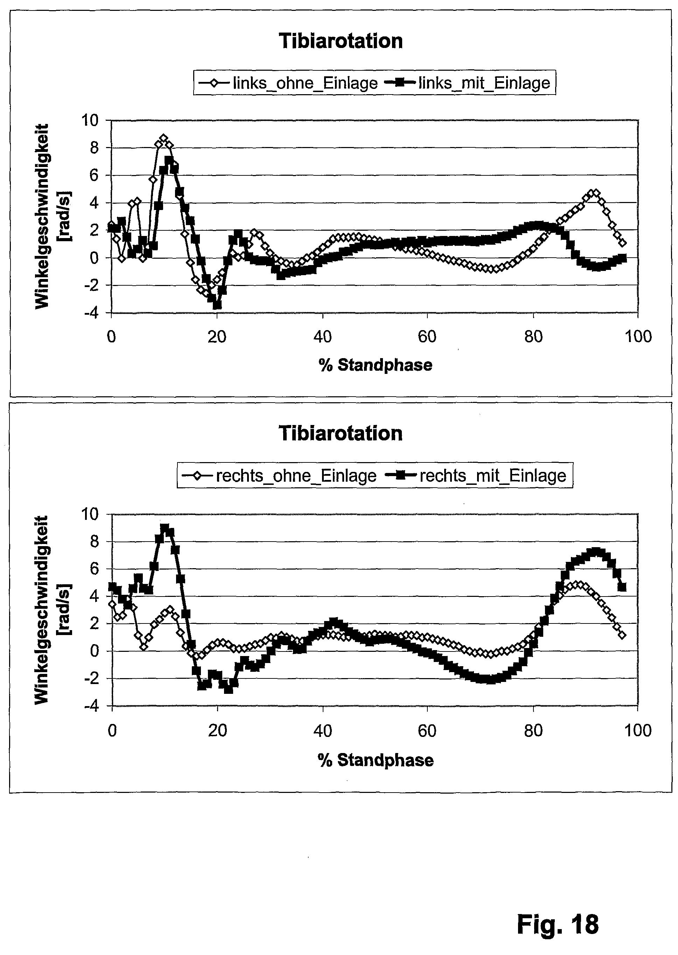

In einer weiteren bevorzugten Ausführung wird als weiterer Sensor ein zweiter Drehgeschwindigkeitssensor derart in die Manschette (10) eingebaut, sodass die Drehung der Tibia um seine beziehungsweise ihre Längsachse (Tibiarotation) gemessen wird (3 in Figur 1). Figur 18 zeigt die Messung der Winkelgeschwindigkeit der Tibiarotation ohne und mit speziellen Schuheinlagen in einer Person links und rechts. Die Messkurven links und rechts werden durch diese Einlagen deutlich ähnlicher, d.h. der Unterschied im Laufstil links und rechts wird verringert.

Der Drehgeschwindigkeitssensor liefert als Ausgangssignal die Winkelgeschwindigkeit im Zeitverlauf. Um daraus den Winkelverlauf zu berechnen, muss dieses Signal integriert werden. Mit Kenntnis der Messfrequenz und des Bezugswinkels wird daraus der Winkelverlauf mit ausreichender Genauigkeit berechnet. Die Messfrequenz wird durch das System selbst vorgegeben und ist somit bekannt. Um den Integrationsfehler ausreichend klein zu halten, muss ein Bezugswinkel bei jedem Schrittzyklus neu bestimmt werden. Eine einfache Nullsetzung am Anfang einer Messung führt bei der Integration sehr schnell zum Aufsummieren von systematischen Fehlern (Drift) und ist nicht ausreichend.

US 6,513,381 weist deutlich auf das Driftproblem hin und beschreibt eine Methode zur Driftkorrektur bei Beschleunigungsdaten, um Laufgeschwindigkeit und zurückgelegte Wegstrecke zu errechnen. Dabei wird auch vorgeschlagen, durch eine Differenz von zwei in bestimmten Abstand parallel angeordneten Beschleunigungssensoren eine Winkelbeschleunigung zu ermitteln und durch zweimalige Integration Winkelwerte zur Pronationswinkelmessung zu erhalten. Dies hat aber den Nachteil, dass sowohl die Winkelgeschwindigkeit aus der ersten Integration zur Driftvermeidung regelmäßig auf bestimmte Werte gesetzt werden muss, als auch der Winkel nach der zweiten Integration. Zudem führen Fehler bei der Setzung der Winkelgeschwindigkeit in der ersten Driftkorrektur nach der zweiten Integration zu Fehlern im zeitlichen Verlauf der Winkeländerung, die durch gelegentliches absolutes Setzten des Winkels nicht korrigiert werden können. Somit driftet ein zweifach integriertes Signal aus Winkelbeschleunigungen bei Pronationswinkelmessungen sehr schnell ab, weil kein allgemeiner Zeitpunkt existiert, an dem die Winkelgeschwindigkeit mit hinreichender Genauigkeit auf ein definiertes Maß (zum Beispiel Null) gesetzt werden kann.

In US 6,513,381 wird zwar auch vorgeschlagen, Winkelgeschwindigkeitsmesser durch einfache Integration zur Winkelmessung zu verwenden und eine Driftkorrektur mittels Setzen des Winkels vorzunehmen, allerdings ist die vorgeschlagene Methode der Setzung an jedem Fußaufsatz völlig ungeeignet, weil der Winkel des Schuhs (2) in Verhältnis zur Senkrechten zu diesem Zeitpunkt extrem variabel ist.

Zur Bestimmung einer Winkelposition eines Drehgeschwindigkeitssensors eignen sich verschieden Verfahren.

Im folgenden wird eine Lösung des Problems der Darstellung des Winkels vorgeschlagen, die darauf beruht, Winkelgeschwindigkeitsmesser durch einfache Integration zur Winkelmessung zu verwenden und eine Korrektur des Winkels (2) bei jedem Schritt vorzunehmen, wobei der Winkel zu variablen Zeiten festgesetzt wird und der Zeitpunkt der Setzung aus dem Signal eines anderen Bewegungssensors gewonnen wird. Insbesondere wird ein Gerät vorgeschlagen (Figur 10), das neben einem Winkelgeschwindigkeitsmesser (12) einen Beschleunigungsmesser (11) an den Schuh befestigt, sodass aus dem Beschleunigungssignal ein Zeitpunkt ermittelt wird, an dem der Winkel (2) des Schuhs Null gesetzt wird.

Das Beschleunigungssignal, das hinreichend genau in der Vertikalrichtung gewonnen wird, wird dabei analysiert, um bestimmte allgemeine Merkmale eines Schrittes zu erkennen (Figur 11). Aufgrund der erkannten Schrittmerkmale wird dann das integrierte Winkelsignal an bestimmten Stellen auf bestimmte Winkel (zum Beispiel Null) gesetzt.

In einer bevorzugten Ausführung wird der Zeitpunkt der Setzung des Winkels durch eine Kombination aus den oben genannten Merkmalen Fußaufsatz, Fersenabstoß und Fußabstoß errechnet. Beispielsweise ist die Standphase als der Zeitraum zwischen Fußaufsatz und Fußabstoß definiert und der Zeitpunkt kann gesetzt werden, wenn ein bestimmter Prozentsatz der Standphase vergangen ist (Figur 11). Alternativ kann ein kleinerer Prozentsatz auf die gesamte Schrittlänge bezogen werden, der sich durch zwei aufeinander folgende Fußaufsatzpunkte ergibt.

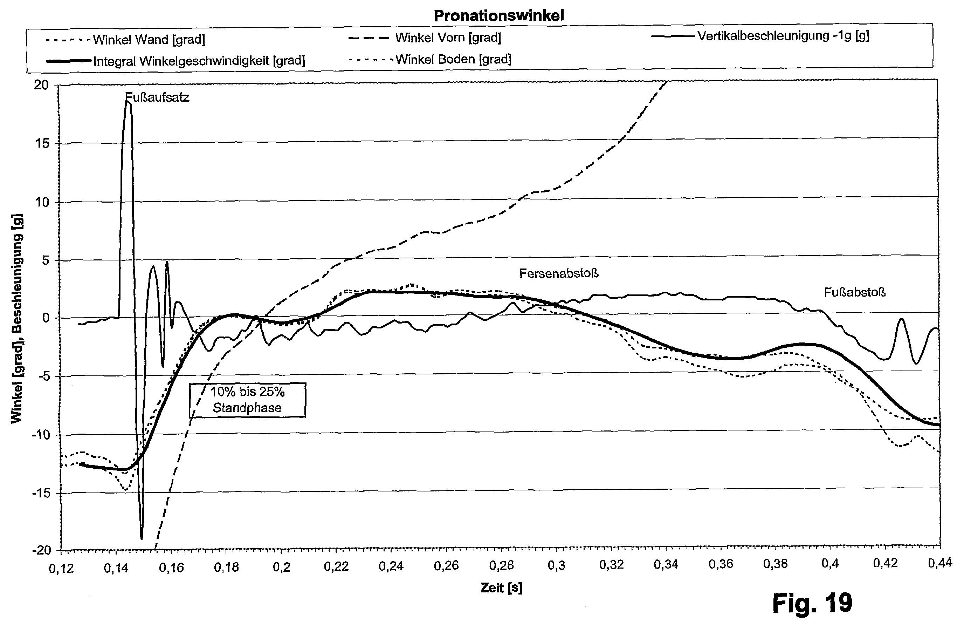

In einer bevorzugten Ausführung ist der Prozentsatz der Standphase oder Schrittlänge variabel und abhängig vom hinreichend vertikalen Beschleunigungssignal. In einer bevorzugten Ausführung wird vom hinreichend vertikalen Beschleunigungssignal ein konstanter Wert subtrahiert (zum Beispiel 1g) und dann der Schwerpunkt des negativen Signalteils innerhalb eines bestimmten Bereichs errechnet. Der Bereich kann auf einen Prozentsatz der Standphase oder Schrittlänge bezogen sein, beispielsweise 10% bis 25% der Standphase. Der Zeitpunkt des Schwerpunktes des negativen Signals innerhalb des gegebenen Bereichs hat im Allgemeinen nur eine geringe Abweichung von dem Zeitpunkt, an dem der Schuh gerade steht, das heißt der Winkel (2) Null ist. Figur 19 zeigt einen Laufschritt, bei dem an der Fersenkappe eine Platine mit dem Beschleunigungssensor (11) und Drehwinkelsensor (12) angebracht war and darauf Marker für die Erkennung der Raumkoordinaten mit fünf IR-Kameras. Aus der räumlichen Lage der Marker wurde der Winkel der Fersenkappe in drei Projektionsebenen berechnet: die Projektion zur Seitenwand (Winkel Wand) und zum Boden (Winkel Boden) entspricht während der Standphase der Drehung in Pronationsrichtung (2), die Projektion zur Vorderwand (Winkel Vorn) entspricht der Drehung in Sagittalebene. Aus dem Sensor (11) wurde die Vertikalbeschleunigung gewonnen. Aus dem Drehgeschwindigkeitssensor (12) wurde durch Integration der Winkelverlauf gewonnen und der Winkel zum Zeitpunkt des Schwerpunkts des negativen Anteils der Vertikalbeschleunigung nach Subtraktion von 1g die Nullpunktsetzung des Winkels vorgenommen. Der Nullpunkt stimmt mit dem aus der 3D-Videoanalyse ermittelten Nullpunkt des Pronationswinkels bei verschiedenen Läufern hinreichend genau überein. Der Winkel zum Zeitpunkt des Fußaufsatzes dagegen ist meist stark negativ (-13 Grad in Figur 19) und von Schritt zu Schritt sehr variabel.

In einer anderen bevorzugten Ausführung wird ein späterer Zeitpunkt während der Standphase zur Nullsetzung herangezogen. Beim Laufen erfolgt der Abstoß aus der Standphase in die Schwungphase hinein üblicherweise über das MFK1 (Mittelfußköpfchen 1). Der Zeitpunkt des Abstoßes wird durch den Verlauf des Signals des Beschleunigungssensors an der Fersenkappe des Schuhes bestimmt und kennzeichnet das Ende der Standphase (100%). War der Fuß vorher in Pronationsstellung, so kommt es zu einer deutlichen Drehbewegung in Supinationsrichtung, und umgekehrt. Die Winkeländerung kurz vor dem Abstoß ist daher ein wichtiger Faktor zur Unterscheidung zwischen Supinierern und Überpronierern. Setzt man den Winkel in diesem Bereich (80-85% Standphase) auf Null, so lässt sich der Winkelverlauf mit einer Auflösung von einigen Grad bestimmen.

In einer anderen bevorzugten Ausführung wird mit einem zusätzlichen Sensor der Schwerpunktverlauf (COP, center of pressure) unter der Ferse gemessen. Der COP ist der Schwerpunkt der Druckverteilung unter der Fußsohle. Er ändert sich mit der Pronationsbewegung. Die Position wird nur in der mediolateralen Richtung unter der Ferse während der Initialpronation gemessen. Die Referenzposition bzw. Winkel wird durch eine Messung im Stand ermittelt. Durch Vergleich mit der COP Messung während des Laufes wird der Zeitpunkt bestimmt, an dem die Fersenkappe den Bezugswinkel einnimmt.

Bei einer bevorzugten Ausführung wird die COP Messung durch ein FSR-Linearpotentiometer durchgeführt. FSR (force sensing resistors) Sensoren sind dünn und flexibel. Sie ändern ihren elektrischen Widerstand in Abhängigkeit von der auf die aktive Oberfläche eingeleiteten Kraft. FSR Linearpotentiometer erlauben zusätzlich zur Druckmessung auch die Bestimmung der Position, an der der Druck eingeleitet wird. Die räumliche Auflösung liegt bei unter 1 mm. Wird der Druck an mehreren Stellen gleichzeitig eingeleitet, entspricht die ausgegebene Position dem COP der einwirkenden Kraft. Das FSR Linearpotentiometer wird so unter der Ferse angebracht, dass es quer zur Laufrichtung liegt und damit eine 1-dimensionale Bestimmung des COP während der Initialpronation zulässt. In einer Ausführung steckt das FSR-Potentiometer in einer speziellen Mess-Socke, die der Proband vorher anzieht.

In einer anderen bevorzugten Ausführung wird der Kontakt der Schuhsohle zum Boden zur Bestimmung eines Winkels während jeden Schrittes herangezogen. Bestimmt wird der Zeitpunkt, an dem ein oder mehrere Teile der Sohle Kontakt zum Boden haben. Dieser Zeitpunkt wird als fester Bezugspunkt für die Winkelberechnung herangezogen. Dazu wird ein Schalter bzw. ein Drucksensor so unter der Sohle angebracht, dass er auf Berührung des Bodens reagiert. Als Schalter eignet sich z.B. ein flacher Folientaster, der auf der Mittellinie der Sohle hinten unter der Ferse angebracht ist. Der Schalter liefert genau dann ein Signal, wenn die Sohle während der Initialpronation solange im hintern Fersenbereich vollen Kontakt zum Boden hat (Mittelstellung). Eine bessere räumliche Auflösung erreicht man durch dünne Drucksensoren, bei denen die Mittelstellung durch den Zeitpunkt des maximalen Druckes bestimmt werden kann. Geeignet sind z.B. FSR Sensoren, die analog zu den Schaltern auf der Mittellinie im Fersenbereich angebracht sind.

In einer anderen bevorzugten Ausführung wird die Entfernung der Sohle oder der Fersenkappe vom Boden zur Bestimmung eines Winkels während jeden Schrittes herangezogen. Dazu werden Sensoren benutzt, die die Entfernung des Messpunktes zum Boden messen. Diese Messpunkte können entweder mit dem Schuh oder direkt mit der Lage des Drehwinkelsensors bzw. dessen Halter gekoppelt werden. Die Entfernungsmessung kann optisch oder kapazitiv erfolgen. Außer einer absoluten Entfernungsmessung kann die Positionsbestimmung relativ durch den Vergleich mehrerer Messpunkte zueinander stattfinden.

Die Lage der Sohle bzw. Fersenkappe zum Boden wird dadurch bestimmt, dass die Messwerte in der Bezugsposition ein Maximum bzw. ein Minimum erreichen. Bei einer bevorzugten Ausführung wird das dadurch erreicht, dass ein Lichtsensor an einem Ende eines schmalen Rohres sitzt, das andere Ende zeigt zum Boden. Ein Minimum wir dann erreicht, wenn das Rohr senkrecht und mit dem kleinsten Abstand zum Boden steht.

In einer anderen bevorzugten Ausführung wird die Kapazität einer Messfläche zum Boden bestimmt. Diese erreicht ein Maximum, wenn sich die Fläche bei gegebenem Abstand parallel zum Boden befindet. Es können auch 2 getrennte Sensorflächen benutzt werden, die z.B. an den inneren und äußeren Seiten des Schuhes oder Sensorhalters (der Sensoren 11 und 12) angebracht werden. Beim Aufsetzen wird zuerst die äußere und dann die innere Kapazität beeinflusst. Aus dem Verhältnis zueinander kann die Lage der Schuhsohle bestimmt werden.

In einer anderen bevorzugten Ausführung erfolgt die Positionsbestimmung mittels dem erdmagnetischem Feld. Das Feld wird mittels einem 3D-Sensor erfasst und ausgewertet.

## Patentansprüche

1. Verfahren zur Auswertung von Beschleunigungswerten im dreidimensionalen Raum, insbesondere zur Umrechnung von Beschleunigungswerten im dreidimensionalen Raum, wobei mindestens ein Beschleunigungssensor (11)
und mindestens ein Drehwinkelsensor oder Drehgeschwindigkeitssensor (12) verwendet werden,
um eine Bewegung in Form von Messwerten zu erfassen, die miteinander verrechnet werden, wobei

    - eine erste Initialmessung mit dem mindestens einen Beschleunigungssensor eine erste Richtung im Raum vorgibt,
    - eine zweite Initialmessung mit dem mindestens einen Beschleunigungssensor eine von der ersten Initialmessung verschiedene Richtung im Raum vorgibt,
- eine zweite Richtung im Raum aus der ersten und zweiten Initialmessung ausgerechnet wird und von den Richtungen der beiden Initialmessungen verschieden ist,
- eine dritte Richtung im Raum aus den bekannten Richtungen ausgerechnet wird und von den ersten beiden Richtungen im Raum verschieden ist,
- eine Umrechnung von Beschleunigungswerten in die besagten drei Richtungen im Raum vorgenommen wird, so dass ein einer gewünschten Richtung entsprechendes Beschleunigungssignal errechnet wird,
- dass dieses einer gewünschten Richtung entsprechende errechnete Signal ausgewertet wird,
- wobei aus dem errechneten Signal in der gewünschten Richtung Anfangs- und Endzeitpunkte. ermittelt werden, zwischen denen die Messwerte des mindestens einen Drehwinkelsensors oder Drehgeschwindigkeitssensors ausgewertet werden.

**2.** Verfahren nach Anspruch 1, **dadurch gekennzeichnet, dass** die zweite Richtung im Raum derart berechnet wird, dass sie jeweils orthogonal zu den beiden Richtungen der zwei Initialmessungen steht.

**3.** Verfahren nach Anspruch 2, **dadurch gekennzeichnet, dass** die dritte Richtung im Raum derart berechnet wird, dass sie jeweils orthogonal zu den beiden ersten Richtungen im Raum steht.

**4.** Verfahren nach einem der vorhergehenden Ansprüche, **dadurch gekennzeichnet, dass** der mindestens eine Beschleunigungssensor (11) so angebracht ist, dass sein Messsignal überwiegend der Vertikalrichtung entspricht.

**5.** Verfahren nach einem der vorhergehenden Ansprüche, dadurch gekenntzeichnet, dass die Messsignale von dem mindestens einen Beschleunigungssensor, der Beschleunigungen in drei Raumrichtungen misst, so verrechnet werden, dass ein der Vertikalrichtung entsprechendes errechnetes Signal ausgewertet wird.

**6.** Verfahren nach einem der vorhergehenden Ansprüche, **dadurch gekennzeichnet, dass** aus dem errechneten vertikalen Signal Fußaufsatz, Fersenabstoß und/oder Fußabstoß bestimmt werden.

**7.** nach einem der vorhergehenden Ansprüche, **dadurch gekennzeichnet, dass** mit den ausgewerteten Messwerte mindestens eines Drehwinkelsensors oder Drehgeschwindigkeitssensors Pronationsparameter, Lauftyp (T) und/oder Schuhempfehlung (SE) berechnet werden.

**8.** Verfahren nach einem der vorhergehenden Ansprüche, **dadurch gekennzeichnet, dass** die ausgewerteten Messwerte mindestens eines Drehwinkelsensors oder Drehgeschwindigkeitssensors (12) der Drehung der Tibia um ihre Längsachse entsprechen.

**9.** Verfahren nach einem der vorhergehenden Ansprüche, **dadurch gekennzeichnet, dass** mit den ausgewerteten Messwerten Schuhe verglichen werden.

**10.** Verfahren nach einem der vorhergehenden Ansprüche, **dadurch gekennzeichnet, dass** mit den ausgewerteten Messwerten die Alterungserscheinungen von Schuhen gemessen werden.

**11.** Verfahren nach einem der vorhergehenden Ansprüche, **dadurch gekennzeichnet, dass** mit den ausgewerteten Messwerten die Wirkung von Schuheinlagen gemessen und/oder bewertet werden.

**12.** Vorrichtung mit Mitteln zum Durchführen aller Schrittes des Verfahrens nach einem der vorhergehenden Ansprüche, wobei
die Vorrichtung ein Trägerelement, insbesondere eine Manschette umfasst, an dem mindestens ein Beschleunigungssensor (11) und mindestens ein Drehgeschwindigkeitssensor (12) oder Drehwinkelsensor angebracht sind, und mit Mitteln, die eingerichtet sind, mit dem mindestens einen Beschleunigungssensor gemessene Beschleunigungen in drei Raumrichtungen so zu verrechnen,
dass ein der Vertikalrichtung entsprechendes Beschleunigungssignal errechnet wird und aus dem errechneten vertikalen Signal Anfangs- und Endzeitpunkte zu ermitteln, zwischen denen die Messwerte des mindestens einen Drehwinkelsensors oder Drehgeschwindigkeitssensors ausgewertet werden.

**13.** Vorrichtung nach Anspruch 12, **dadurch gekennzeichnet, dass** das Trägerelement an einem vorzugsweise elastischen Befestigungsband (13) angebracht ist,
das an einer Fersenkappe eines Schuhs oder an einer Ferse eines Fußes befestigt ist.

## Claims

**1.** Process for evaluating acceleration values in three-dimensional space, in particular for converting acceleration values in three-dimensional space, where at least one acceleration sensor (11) and at least one rotation-angle sensor or rotation-speed sensor (12) are used in order to detect a movement in form of measurement values which are applied against one another, where

- a first initial measurement with which at least one acceleration sensor defines a first direction in space,
- a second initial measurement with which at least one acceleration sensor defines a direction in space and differs from the first direction in space,
- a second direction space is calculated from the first and second initial measure-ment which differs from the directions of the two initial measurements,
- a third direction in space is calculated from the known directions and differs from the first two directions in space,
- a conversion of acceleration values in the three preceding directions in space is carried out in such a way that an acceleration signal is calculated corresponding to a desired direction,
- that this calculated signal corresponding to a desired direction is evaluated,
- where, from the calculated signal in the desired direction, the starting and finish-ing times are determined, between which the measurement values of the at least one rotation-angle sensor or the at least one rotation-speed sensor are evaluated.

**2.** Process in accordance with claim 1, **characterised in that** the second direction in space is calculated in such a way that it is orthogonal to each of the two directions of the two initial measurements.

**3.** Process in accordance with claim 2, **characterised in that** the third direction in space is calculated in such a way that it is orthogonal to each of the first two directions in space.

**4.** Process in accordance with any of the preceding claims, **characterised in that** the at least one acceleration sensor (11) is mounted in such a way that its measure-ment signal corresponds mainly to the vertical direction.

**5.** Process in accordance with any of the preceding claims, **characterised in that** the measuring signals from the at least one acceleration sensor which measures accelerations in three spatial directions, is applied against one another in such a way that a calculated signal corresponding to the vertical direction is evaluated.

**6.** Process in accordance with any of the preceding claims, **characterised in that** foot impact, heel thrust and/or foot thrust can be determined from the calculated vertical signal.

**7.** Process in accordance with any of the preceding claims, **characterised in that**, on the basis of the processed readings from at least one rotation-angle sensor or rotation-speed sensor, the pronation parameters, running type (T) and/or shoe recommendation (SE) are calculated.

**8.** Process in accordance with any of the preceding claims, **characterised in that** the processed readings from at least one rotation-angle sensor or rotation-speed sensor (12) equal the rotation of the tibia around its longitudinal axis.

**9.** Process in accordance with any of the preceding claims, **characterised in that** shoes are compared using the evaluated readings.

**10.** Process in accordance with any of the preceding claims, **characterised in that** the ageing symptoms of shoes are measured using the evaluated readings.

**11.** Process in accordance with any of the preceding claims, **characterised in that** the effect of shoe inlays are measured and/or assessed using the evaluated readings.

**12.** A device possessing the means for executing all the steps of the process in accordance with any of the preceding claims, where the device comprises a carrying element, in particular a band to which at least one acceleration sensor (11) and at least one rotation-speed sensor (12) or rotation-angle sensor are attached, and means which are set in such a way as to process the readings from the at least one acceleration sensor in three spatial directions, thereby yielding an acceleration signal corresponding to the vertical direction, from which the times are obtained for starting and stopping the evaluation of the readings from the at least one rotation-angle sensor or rotation-speed sensor.

**13.** Device in accordance with claim 12, **characterised in that** the carrier element is fastened to a preferably elastic securing band (13) which is attached to the heel cap of a shoe or to the heel of a foot.

**Revendications**

**1.** Procédé d'évaluation de valeurs d'accélération dans l'espace tridimensionnel, en particulier pour convertir par le calcul des valeurs d'accélération dans l'espace tridimensionnel, sachant que sont utilisés au moins un capteur d'accélération (11) et au moins un capteur d'angle de rotation ou capteur de vitesse de rotation (12) afin de saisir un mouvement sous forme de valeurs de mesure compensées entre elles par le calcul, sachant que

- un premier mesurage initial avec au moins un capteur d'accélération définit une première direction dans l'espace,
- un deuxième mesurage initial avec cet au moins un capteur d'accélération définit une direction dans l'espace différente de celle du premier mesurage initial,
- une deuxième direction dans l'espace est obtenue par le calcul à partir des premier et deuxième mesurages initiaux, et qu'elle diffère des directions des deux mesurages initiaux,
- une troisième direction dans l'espace est obtenue par le calcul à partir des directions connues, et qu'elle diffère des deux premières directions dans l'espace,
- une conversion par le calcul des valeurs d'accélération dans les trois directions spatiales précitées est effectuée de sorte qu'est calculé un signal d'accélération correspondant à une direction souhaitée,
- de sorte que ce signal calculé correspondant à une direction souhaitée est analysé,
- sachant qu'à partir du signal calculé sont déterminés des points de départ et de fin du temps dans la direction souhaitée, points entre lesquels les valeurs de mesure d'au moins un capteur d'angle de rotation ou capteur de vitesse de rotation sont évaluées.

**2.** Procédé selon la revendication 1, **caractérisé en ce que** la deuxième direction dans l'espace est calculée de sorte à être perpendiculaire aux deux directions des deux mesurages initiaux.

**3.** Procédé selon la revendication 2, **caractérisé en ce que** la troisième direction dans l'espace est calculée de sorte à être perpendiculaire aux deux premières directions dans l'espace.

**4.** Procédé selon l'une des revendications précédentes, **caractérisé en ce que** l'au moins un capteur d'accélération (11) est fixé de sorte que son signal de mesure corresponde principalement à la direction verticale.

**5.** Procédé selon l'une des revendications précédentes, **caractérisé en ce que** sont compensés entre eux, par le calcul, les signaux de mesure de l'au moins un capteur d'accélération mesurant les accélérations dans les trois directions spatiales, de sorte qu'un signal calculé correspondant à la direction verticale est évalué.

**6.** Procédé selon l'une des revendications précédentes, **caractérisé en ce qu'**à partir du signal vertical calculé sont déterminés le posage du pied, la poussée du talon et/ou la poussée du pied.

**7.** Procédé selon l'une des revendications précédentes, caractérisé en ce qu'à l'aide des valeurs de mesure analysées d'au moins un capteur d'angle de rotation ou capteur de vitesse de rotation sont calculés les paramètres de pronation, le type de marche (T) et/ou la recommandation de chaussure (SE).

**8.** Procédé selon l'une des revendications précédentes, **caractérisé en ce que** les valeurs de mesure évaluées de l'au moins un capteur d'angle de rotation ou capteur de vitesse de rotation (12) correspondent à la rotation du tibia autour de son axe longitudinal.

**9.** Procédé selon l'une des revendications précédentes, **caractérisé en ce que** les chaussures sont comparées avec les valeurs de mesure évaluées.

**10.** Procédé selon l'une des revendications précédentes, **caractérisé en ce que** les valeurs de mesure évaluées permettent de mesurer les phénomènes de vieillissement des chaussures.

**11.** Procédé selon l'une des revendications précédentes, **caractérisé en ce que** les valeurs de mesure évaluées permettent de mesurer et/ou d'évaluer l'effet des garnitures intérieures de chaussures.

**12.** Dispositif équipé de moyens pour réaliser toutes les étapes du procédé selon l'une des revendications précédentes, sachant que le dispositif comprend un élément support, en particulier une manchette, contre lequel sont fixés au moins un capteur d'accélération (11) et au moins un capteur de vitesse de rotation (12) ou capteur d'angle de rotation, et de moyens configurés pour compenser par le calcul les accélérations mesurées dans les trois directions spatiales par l'au moins un capteur d'accélération, de sorte que soit calculé un signal d'accélération correspondant à la direction verticale et pour déterminer des points départ et de fin du temps à partir du signal vertical calculé, points entre lesquels sont analysées les valeurs mesurées par au moins un capteur d'angle de rotation ou capteur de vitesse de rotation.

**13.** Dispositif selon la revendication 12, **caractérisé en ce que** l'élément support est fixé contre un ruban de fixation (13) de préférence élastique, lui-même fixé contre le contrefort d'une chaussure ou contre le talon d'un pied.

1
2
3

Fig. 1

10
9
8
7
6
5
4
3

Fig. 2

R2
I 2
E
I 1 = R 1

Fig. 3

R3
R2
R1
E

Fig. 4

A1
A2
A3
8
7
6
5
I1

Fig. 5

8
7
A1
6
5
A2
A3
I 2

Fig. 6

Lateralbeschleunigung
A3 gemessen [g]
R2 berechnet [g]
Videokontrolle: Beschleunigung [g]
Videokontrolle: Geschwindigkeit [m/s]
Drucksohle [Einheiten rechts]
Beschleunigung [g], Geschwindigkeit [m/s]
1
0,8
0,6
0,4
0,2
0
-0,2
-0,4
-0,6
-0,8
-1
4,
3,
2,
1,
0,
2,1
2,2
2,3
2,4
2,5
2,6
2,7
2,8
2,9
3
3,1
3,2
3,3
3,4
Zeit [s]

Fig. 7

A1
A2
A3
3D
R1
R3
R2
HP
TP
SD
GD
P
T
SE
I
NK
I
NF
ED

Fig. 8

a
9
10
S1
S2
Sn
O1
O2
On
MP
F
A
RF

b

F
R
A
MP
RF
SG
V
T
D
L

Fig. 9

10
9
11
12
13
13

Fig. 10

Fußaufsatz
Fersenabstoß
Fußabstoß
Standphase
Fußaufsatz
Fersenabstoß
Fußabstoß
Standphase
Fußaufsatz
Fersenabstoß
Fußabstoß
Standphase
Fußaufsatz
20
15
10
5
0
-5
Vertikalbeschleunigung [g]
2
2,5
3
3,5
4
4,5
5
Time [sec]

**Fig. 11**

SE
T
P
L/R
NK
I
NF
DG
SD
HP
TP
VB

Fig. 12

Laufstil

Supi - nierer | Normal Läufer | Überpro- nierer

Pronationsstütze

keine
leicht
stark

Laufstil

Supi - nierer | Normal Läufer | Überpro- nierer

Pronationsstütze

keine
leicht
stark

Laufstil

Supi - nierer | Normal Läufer | Überpro- nierer

Pronationsstütze

keine
leicht
stark

Laufstil

Supi - nierer | Normal Läufer | Überpro- nierer

Pronationsstütze

keine
leicht
stark

**Fig. 13**

DREHBELASTUNG
hoch
mittel
niedrig
STOSSBELASTUNG
hoch
mittel
niedrig

Fig. 14

Neutralschuh - - - Schuh mit Pronationsstütze
Winkelgeschwindigkeit [rad/s]
6
5
4
3
2
1
0
-1
-2
-3
0%
20%
40%
60%
80%
100%
% Standphase

Fig. 15

Maximale Winkelgeschwindigkeit
120%
100%
80%
60%
40%
20%
0%
-20%
-40%
-60%
% Zunahme zu km0
200
400
600
800
Laufkilometer

Fig. 16

Maximale Vertikalbeschleunigung [g] (+/- sd, n=2, links/rechts)
20
15
10
5
0
Barfuss
Gymnastiks...
Nike free 4.5
Nike free 5.0
Neutralschuh 1
Neutralschuh 2
Zeit der maximalen Beschleunigung [ms] (+/-sd, n=2, links/rechts)
45
35
25
15
Barfuss
Gymnastiks...
Nike free 4.5
Nike free 5.0
Neutralschuh 1
Neutralschuh 2
Mittlere Anstiegsrate [g/s] (+/-sd, n=2, links/rechts)
800
600
400
200
0
Barfuss
Gymnastikschuh
Nike free 4.5
Nike free 5.0
Neutralschuh 1
Neutralschuh 2

**Fig. 17**

Tibiarotation
links_ohne_Einlage
links_mit_Einlage
Winkelgeschwindigkeit [rad/s]
10
8
6
4
2
0
-2
-4
0
20
40
60
80
100
% Standphase
Tibiarotation
rechts_ohne_Einlage
rechts_mit_Einlage
Winkelgeschwindigkeit [rad/s]
10
8
6
4
2
0
-2
-4
0
20
40
60
80
100
% Standphase

Fig. 18

Pronationswinkel
Winkel Wand [grad]
Integral Winkelgeschwindigkeit [grad]
Winkel Vorn [grad]
Winkel Boden [grad]
Vertikalbeschleunigung -1g [g]
Fußaufsatz
Fersenabstoß
Fußabstoß
10% bis 25% Standphase
Winkel [grad], Beschleunigung [g]
20
15
10
5
0
-5
-10
-15
-20
Zeit [s]
0,12
0,14
0,16
0,18
0,2
0,22
0,24
0,26
0,28
0,3
0,32
0,34
0,36
0,38
0,4
0,42
0,44

Fig. 19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6658292 B
- US 6305221 B
- US 6513381 B


### In der Beschreibung aufgeführte Nicht-Patentliteratur


- **LAFORTUNE, M. A. ; HENNIG, E. M.** *Med. Sci. Sports & Exerc.,* 1991, vol. 23 (3), 360-363
- **LAFORTUNE, M. A.** *J. Biomechanics,* 1991, vol. 24 (10), 877-886